# EUROPEAN PATENT APPLICATION

(11) **EP 4 756 374 A2**
(43) Date of publication of application: **10.06.2026**
(21) Application number: 26174616.8
(22) Date of filing: 05.08.2024
(51) Int. Cl.: G01C 15/00

(54) **LASER LEVEL ASSEMBLY**

(30) Priority: 07.08.2023 US 202363531187 P
(62) Divisional of application: 24192948.8
(71) Applicant: Stanley Black & Decker Inc., New Britain, CT 06053 (US)
(72) Inventor: Jhawar, Devansh Kishore, Baltimore, 21201 (US); Jain, Kavya, Timonium, 21093 (US); Qin, Fugen, Lutherville-Timonium, 21093 (US); Leone, Dominic Maurice, Baltimore, 21208 (US); Norr, Kenneth Michael, Timonium, 21093 (US); Sergyeyenko, Oleksiy P., Baldwin, 21013 (US)
(74) Representative: Slingsby Partners LLP

(57) **Abstract**

A laser level assembly comprising: a laser level, the laser level comprising a laser generator, the laser level configured to project at least one horizontal line and at least one vertical line; a battery pack receptacle configured to selectively receive a removable battery pack, the removable battery pack configured to power the laser generator; a wireless transmitter; a secondary power device, the secondary power device configured to power the wireless transmitter; wherein the secondary power device is in a water-resistant housing.

## Description

The present invention relates to construction tools such as a construction laser level.

There are various existing laser levels. It is desired to provide a laser level assembly with a unique construction.

A first aspect of the disclosure and the invention provides a laser level assembly according to Claim 1 of the appended claims.

Preferred, and other optional, features of the disclosure and the invention are defined and described in the dependent claims.

It is explicitly to be understood that any feature or embodiment, including any preferred or other optional feature or embodiment, of any aspect or embodiment of the disclosure or the invention, may be a feature or embodiment, including a preferred or other optional feature or embodiment, of any other aspect or embodiment of the disclosure or the invention.

According to another aspect, the present disclosure describes a laser level assembly, comprising: a mount; a rotational base; a laser level on the rotational base; wherein the laser level and the rotational base are rotatable about a first axis relative to the mount; and wherein the laser level is rotatable about a second axis relative to the mount and the rotational base; wherein rotation of the laser level about the second axis is driven by a motor.

The laser level assembly may further comprise a battery powering the motor.

The laser level assembly may further comprise a controller configured to control operation of the motor.

The laser level assembly may further comprise a wireless transceiver configured to receive wireless control signals.

According to another aspect, there is a laser level assembly, comprising a mount; a rotational base; a laser level on the rotational base; wherein the laser level and the rotational base are rotatable about a first axis relative to the mount; and wherein the laser level is rotatable about a second axis relative to the mount and the rotational base; wherein rotation of the laser level about the first axis is driven by a first motor; and wherein rotation of the laser level about the second axis is driven by a second motor.

The first motor may be disposed in the mount.

The second motor may be disposed in the rotational base.

The laser level assembly may further comprise a removable battery pack powering the first motor and the second motor.

The laser level assembly may further comprise a controller configured to control operation of the motor.

The laser level assembly may further comprise a wireless transceiver configured to receive wireless control signals.

According to another aspect, there is an exemplary embodiment of a laser level assembly, comprising: a mount comprising a mounting portion and a base portion transverse to the mounting portion, wherein the mounting portion is configured to be secured to a surface; a rotational base on the base portion of the mount; a laser level on the rotational base; wherein the laser level comprises a first vertical beam; a second vertical beam and a first horizontal beam; wherein the laser level is rotatable about a first axis; wherein the laser level is rotatable about a second axis; wherein the second axis is at a cross point of the first vertical beam and the second vertical beam; wherein rotation of the laser level about the first axis is driven by a first motor; and wherein rotation of the laser level about the second axis is driven by a second motor.

The first motor may be disposed in the mount.

The second motor may be disposed in the rotational base.

The laser level assembly may further comprise a removable battery pack powering the first motor and the second motor.

The laser level assembly may further comprise a controller configured to control operation of the motor.

The laser level assembly may further comprise a wireless transceiver configured to receive wireless control signals.

The mounting portion of the mount may include magnets.

According to another aspect, there is an exemplary embodiment of laser level assembly including: a mounting bracket; a laser level; and a motor; wherein the mounting bracket includes a mounting portion and a base portion transverse to the mounting portion; wherein the laser level is disposed on the base portion; and wherein the base portion is configured for vertical translation relative to the mounting portion; and wherein the motor drives the vertical translation of the base portion.

The motor may be mounted in the mounting bracket.

The laser level assembly may further comprise a rack and a pinion engaged with the rack.

The motor may drive rotation of the pinion.

The rack may be on the mounting portion of the mounting bracket.

The mounting bracket may further comprise a bottom portion.

The bottom portion may be parallel to the base portion.

The bottom portion may include a screw thread mount.

The rack may extend in a vertical direction along the mounting portion.

The rack may extend along a central portion of the mounting portion.

The rack may extend along a side of the mounting portion.

According to another aspect, there is an exemplary embodiment of a laser level assembly including a mounting bracket comprising a mounting portion and a base portion transverse to the mounting portion; a laser level; and a first motor configured to drive vertical translation of the laser level relative to the mounting portion of the mounting bracket; and a second motor configured to drive rotational motion of the laser level about a vertical axis.

The first motor may be disposed in the mounting bracket.

The second motor may be disposed in the mounting bracket.

The laser level assembly may further include a rack and a pinion.

According to another aspect, there is an exemplary embodiment of a laser level assembly including: a mounting bracket comprising a mounting portion and a base portion transverse to the mounting portion; a laser level on the mounting bracket; and a ceiling wall mount. The mounting bracket is connected to the ceiling wall mount at the mounting portion. The mounting bracket includes a motor and a pinion driven by the motor. The ceiling wall mount includes a rack engaged with the pinion. Rotation of the motor causes the mounting bracket to translate in a vertical direction relative to the ceiling wall mount.

The ceiling wall mount may include a metal plate.

The mounting portion may include magnets, and attraction between the magnets and the metal plate connect the mounting bracket to the ceiling wall mount.

The rack may extend along an edge of the metal plate.

The rack may extend along opposite edges of the metal plate.

The mounting bracket may further include a rotational motor which selectively drives rotational motion of the laser level about a vertical axis.

According to an aspect of an example embodiment, a laser level assembly includes: a mounting bracket comprising an attachment bracket and a movable bracket; a laser level mounted on the movable bracket, the laser level configured to project at least one of a horizontal line, a vertical line or a laser spot; a motor in the movable bracket, wherein the motor is configured to drive movement of the movable bracket relative to the attachment bracket; and a clutch operatively associated with the motor.

The laser level assembly may further include a pinion driven by the motor.

The clutch may be operatively between the motor and the pinion.

The attachment bracket may include a rack.

The pinion may be engaged with the rack.

The attachment bracket may further include a door that is movable between an open position and a closed position. When the door is in the closed position, the door blocks the pinion from disengagement from the rack. Wherein when the door is in the open position, the door does not block the pinion from disengagement from the rack.

The movable bracket may include a biasing member that biases the movable bracket away from the attachment bracket to facilitate movement of the movable bracket relative to the attachment bracket.

The door may be at a top end of the attachment bracket.

The attachment bracket may include magnets.

The movable bracket may include a battery receptacle configured to receive a battery pack.

According to an aspect of an example embodiment, a laser level assembly includes: an attachment bracket; a movable bracket attached to the attachment bracket and configured to translate relative to the attachment bracket; a laser level mounted on the movable bracket, the laser level configured to project at least one of a horizontal line, a vertical line or a laser spot; a motor in the movable bracket, wherein the motor is configured to drive translation of the movable bracket relative to the attachment bracket; further comprising a clutch operatively associated with the motor.

The laser level assembly may further include a pinion driven by the motor.

The clutch may be operatively between the motor and the pinion.

The attachment bracket may further include a rack.

The clutch may include a first clutch part with first teeth and a second clutch part with second teeth. The first teeth and second teeth may be selectively engaged.

The pinion may be integral with the second clutch part.

The attachment bracket may include a rack.

According to an aspect of an example embodiment, a laser level assembly includes: a mounting bracket comprising an attachment bracket and a movable bracket; a laser level mounted on the movable bracket, the laser level configured to project at least one of a horizontal line, a vertical line or a laser spot; a motor in the movable bracket, wherein the motor is configured to drive movement of the movable bracket relative to the attachment bracket; and a pinion driven by the motor. The attachment bracket may include a rack. The pinion may be engaged with the rack. The attachment bracket may include a door that is movable between an open position and a closed position. When the door is in the closed position, the door blocks the pinion from disengagement from the rack. When the door is in the open position, the door does not block the pinion from disengagement from the rack.

The movable bracket may include a biasing member that biases the movable bracket away from the attachment bracket to facilitate movement of the movable bracket relative to the attachment bracket.

According to an aspect of an example embodiment, a laser level assembly includes: a mounting bracket comprising an attachment bracket and a movable bracket; a laser level mounted on the movable bracket, the laser level configured to project at least one of a horizontal line, a vertical line or a laser spot; a first motor in the movable bracket, wherein the first motor is configured to drive movement of the movable bracket relative to the attachment bracket. The movable bracket may include a base part configured to support the laser level and a battery cap part attached to the base part.

The laser level assembly may further include a first sealing member between the base part and the battery cap part.

The battery cap part may be configured to receive a battery pack.

The battery cap part may be configured to hold a battery pack receptacle.

The battery pack receptacle includes at least one electrical connector configured to connect to the battery pack.

The laser level assembly may further include a second motor between the battery cap part and the base part.

The movable mounting bracket may further include a back cap.

The laser level assembly may further include a second sealing member between the back cap and the base part.

The first motor may be housed between the back cap and the base part.

The back cap may be configured to engage the attachment bracket.

The battery cap part may include a frame and a cover plate.

According to an aspect of an example embodiment, a laser level assembly includes: a mounting bracket comprising an attachment bracket and a movable bracket; a laser level mounted on the movable bracket, the laser level configured to project at least one of a horizontal line, a vertical line or a laser spot; a first motor in the movable bracket, wherein the first motor is configured to drive movement of the movable bracket relative to the attachment bracket. The movable bracket may include a base part configured to support the laser level and a back cap part attached to the base part. The laser level assembly may also include a sealing member between the back cap part and the base part.

The laser level assembly may further include a battery cap part attached to the base part and configured to receive a battery pack.

The battery cap part may be configured to hold a battery pack receptacle.

The battery pack receptacle may include at least one electrical connector configured to connect to the battery pack.

The laser level assembly may further include a second motor between the battery cap part and the base part.

The first motor may be housed between the back cap and the base part.

The back cap may be configured to engage the attachment bracket.

According to an aspect of an example embodiment, a laser level includes: a pendulum; a laser generator on the pendulum, the laser generator configured to project at laser beam; a pendulum lock configured to selectively lock the pendulum; a pendulum lock switch configured to move between a pendulum lock position and a pendulum unlocked position; and a power button configured to control operation of the laser generator. When the pendulum lock switch is in a locked position and the power button is turned on, the laser generator turns on.

When the pendulum lock switch is in a locked position and the power button is turned off, the laser generator turns off.

When the pendulum lock switch is in the unlocked position and the power button is turned from an on condition to an off condition, the laser level is not turned off.

According to an aspect of an example embodiment, a laser level assembly includes a mounting bracket; a laser level on the mounting bracket, the laser level comprising a laser generator, the laser level configured to project at least one of a horizontal line, a vertical line or a laser spot; wherein the mounting bracket comprises a battery pack receptacle configured to selectively receive a removable battery pack; at least one of a wireless transmitter and a controller; a secondary power device; wherein the removable battery pack is configured to power the at least one laser generator; wherein the secondary power device is configured to power at least one of a wireless transmitter and the controller.

The secondary power device may be in the mounting bracket.

The secondary power device may supply power at a first voltage; the removable battery pack may supply power at a second voltage; and the first voltage may be lower than the second voltage.

The secondary power device may include an internal battery.

The secondary power device may include a coin cell.

According to an aspect of an example embodiment, a laser level assembly includes: a mounting bracket, the mounting bracket comprising a base part and a back cap; a laser level on the mounting bracket, the laser level comprising a laser generator, the laser level configured to project at least one of a horizontal line, a vertical line or a laser spot; a battery pack receptacle configured to selectively receive a removable battery pack; a wireless transmitter; a circuit board in the mounting bracket; a secondary power device on the circuit board; wherein the removable battery pack is configured to power the at least one laser generator; wherein the secondary power device is configured to selectively power the wireless transmitter.

The secondary power device may be in the mounting bracket.

The secondary power device may be in the mounting bracket between the base part and the back cap.

The base part and the back cap may be fixed together via fasteners.

The laser level assembly may include a sealing member between the base part and the back cap.

The secondary power device may supply power at a first voltage, the removable battery pack may supply power at a second voltage; and the first voltage is lower than the second voltage.

The laser level assembly may include a controller on the circuit board.

The secondary power device may include a coin cell.

The secondary power device may be integral with the laser level assembly and replaceable via service center.

According to an aspect of an example embodiment, a laser level assembly includes: a laser level, the laser level comprising a laser generator, the laser level configured to project at least one horizontal line and at least one vertical line; a battery pack receptacle configured to selectively receive a removable battery pack, the removable battery pack configured to power the laser generator; a wireless transmitter; a secondary power device, the secondary power device configured to power the wireless transmitter; wherein the secondary power device is in a water-resistant housing.

The water-resistant housing may include a first housing part, a second housing part and a sealing member between the first housing part and the second housing part.

The first housing part may be fixed to the second housing part via at least one fastener.

The secondary power device may supply power at a first voltage; the removable battery pack may supply power at a second voltage; and the first voltage may be lower than the second voltage.

The laser level assembly may include a circuit board in the water-resistant housing. The secondary power device may be on the circuit board.

The secondary power device may be integral with the laser level assembly and replaceable via service center.

Embodiments and implementations of the disclosure and invention will now be described, by way of example, with reference to the accompanying figures, of which:
Fig. 1 illustrates a perspective view of an exemplary embodiment of a laser level assembly;
Fig. 2 illustrates a top view of an exemplary embodiment of a laser level assembly;
Fig. 3 illustrates another top view of an exemplary embodiment of a laser level assembly;
Fig. 4 is a bottom perspective view of an exemplary embodiment of a lower housing section;
Fig. 5 is a top view of an exemplary embodiment of a lower housing section;
Fig. 6 is a top perspective view of an exemplary embodiment of the rotational base;
Fig. 7 is a bottom perspective view of an exemplary embodiment of a top section of the rotational base;
Fig. 8 is a bottom perspective view of an exemplary embodiment of a top section of the rotational base;
Fig. 9 is a bottom perspective view of an exemplary embodiment of the rotational base;
Fig. 10 is an internal perspective view of an exemplary embodiment of the rotational base;
Fig. 11 is an internal perspective view of an exemplary embodiment of the rotational base;
Fig. 12 is a top view of an exemplary embodiment of a laser module;
Fig. 13 is a perspective view of an exemplary embodiment of a laser module; and
Fig. 14 is schematic diagram.
Fig. 15 illustrates a side view of an exemplary embodiment of a laser level assembly;
Fig. 16 is a side view of the exemplary embodiment of the laser level assembly with the ceiling wall mount separated from the mounting bracket;
Fig. 17 is a perspective view of an exemplary embodiment of a laser level assembly;
Fig. 18 is a perspective view an exemplary embodiment of a laser level assembly;
Fig. 19 is a perspective cut-away view of an exemplary embodiment of a laser level assembly;
Fig. 20 is a side cut-away view of an exemplary embodiment of a laser level assembly;
Fig. 21 is a bottom cut-away view of an exemplary embodiment of a laser level assembly through a portion of the bottom of the mounting bracket;
Fig. 22 is an exploded view of parts of an exemplary embodiment of a laser level assembly;
Fig. 23 is a close-up view of a rotational driving feature an exemplary embodiment of a laser level assembly;
Fig. 24 is a side view of an exemplary embodiment of a laser level assembly;
Fig. 25 is a perspective view of an exemplary embodiment of a laser level assembly;
Fig. 26 is a side view of an exemplary embodiment of a ceiling mount;
Fig. 27 is a side view of an exemplary embodiment of a laser level assembly;
Fig. 28 is a side view of an exemplary embodiment of a laser level assembly;
Fig. 29 is a side view of an exemplary embodiment of a laser level assembly;
Fig. 30 is a side view of an exemplary embodiment of a laser level assembly;
Fig. 31 is a side view of an exemplary embodiment of a laser level assembly;
Fig. 32 is a perspective view of an exemplary embodiment of a laser level assembly;
Fig. 33 is a perspective view of an exemplary embodiment of a remote control;
Fig. 34 illustrates a top view of an exemplary embodiment of a laser level assembly;
Fig. 35 illustrates a top view of an exemplary embodiment of a laser level assembly;
Fig. 36 illustrates a top view of an exemplary embodiment of a laser level assembly;
Fig. 37 is a perspective view of an exemplary embodiment of a laser level assembly;
Fig. 38 is a perspective view of an exemplary embodiment of a laser level assembly;
Fig. 39 is an exploded side-view of an exemplary embodiment of a laser level assembly;
Fig. 40 is a cross-sectional side-view of an exemplary embodiment of a laser level assembly;
Fig. 41 is a cross-sectional side-view of a portion of an exemplary embodiment of a laser level assembly;
Fig. 42 is a perspective view of an exemplary embodiment of a drive unit;
Fig. 43 is a perspective view of an exemplary embodiment of a drive unit and laser level assembly;
Fig. 44 is a perspective bottom view of an exemplary embodiment of a drive unit;
Fig. 45 is a perspective side view of an exemplary embodiment of a drive unit;
Fig. 46 is a perspective view of an exemplary embodiment of an attachment bracket;
Fig. 47 is a rear perspective view of an exemplary embodiment of a laser level assembly;
Fig. 48 is a side perspective view of a portion of an example embodiment of a laser level assembly;
Fig. 49 is a side perspective view of a portion of an example embodiment of a laser level assembly;
Fig. 50 is a side perspective view of a portion of an example embodiment of a laser level assembly;
Fig. 51 is a side perspective view of a portion of an example embodiment of a laser level assembly;
Fig. 52 is a side cross-sectional view of a portion of an example embodiment of a laser level assembly;
Fig. 53 is a cross-sectional view of a portion of an example embodiment of a laser level assembly;
Fig. 54 is a perspective view of a motor and clutch assembly of an example embodiment of a laser level assembly;
Fig. 55 is an exploded view of a motor and clutch assembly of an example embodiment of a laser level assembly;
Fig. 56 is a rear view of an example embodiment of a mount of an example embodiment of a laser level assembly;
Fig. 57 is a cross-sectional view of a portion of an example embodiment of a laser level assembly;
Fig. 58 is an exploded view of a movable bracket of an example embodiment;
Fig. 59 is an exploded view of portions of a movable bracket of an example embodiment;
Fig. 60 is bottom view of an example embodiment;
Fig. 61 is an exploded view of a portion of a movable bracket of an example embodiment;
Fig. 62 is a back view of an example embodiment;
Fig 63 is a view of a portion of a bracket according to an example embodiment;
Fig. 64 is a perspective view of a portion of a bracket of an example embodiment;
Fig. 65 is a partially exploded perspective view of a motor according to an example embodiment;
Fig. 66 is a side view of a laser level assembly of an example embodiment;
Fig. 67 is a side view of a laser level assembly of an example embodiment;
Fig. 68 is a explanatory table of operation of a laser level assembly of an example embodiment;
Fig. 69 is a perspective view of an explanatory drawing of a pendulum lock according to an example embodiment;
Fig. 70 is a perspective view of an explanatory drawing of a pendulum lock according to an example embodiment;
Fig. 71 is a side view of a user interface of an example embodiment;
Fig. 72 is a front view of a remote control device according to an example embodiment; and
Fig. 73 is an exploded view of a remote control device according to an example embodiment.

The drawings are for the purpose of illustration and description only and are not intended as a definition of the limits of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

All closed-ended (e.g., between A and B) and open-ended (greater than C) ranges of values disclosed herein explicitly include all ranges that fall within or nest within such ranges. For example, a disclosed range of 1-10 is understood as also disclosing, among other ranged, 2-10, 1-9, 3-9, etc.

As used herein, the terminology "at least one of A, B and C" and "at least one of A, B or C" each mean any one of A, B or C or any combination of A, B and C. For example, at least one of A, B and C may include only A, only B, only C, A and B, A and C, B and C, or A, B and C.

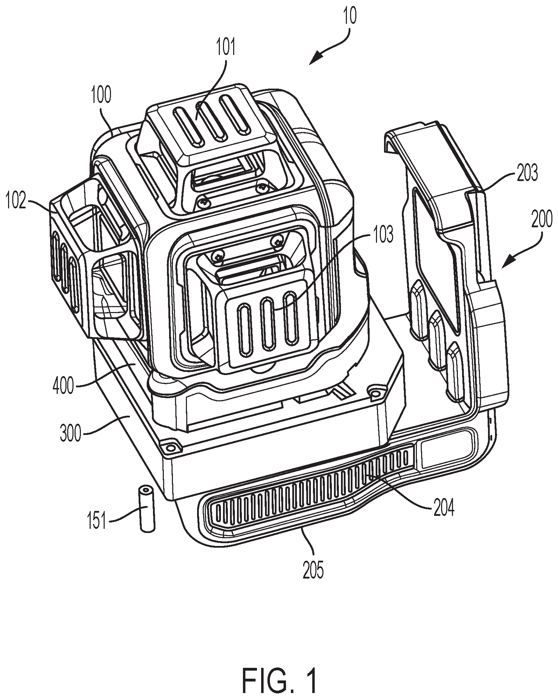

Fig. 1 illustrates a perspective view of a non-limiting, exemplary embodiment of a laser level assembly 10 of the present application. The laser level assembly 10 of Fig. 1 includes a 3 x 360 laser level 100. The laser level 100 produces two vertical laser beams and one horizontal laser beam. As shown in Fig. 1, the laser level 100 includes three laser projectors 101, 102 and 103. The three laser projectors project three perpendicular laser beams.

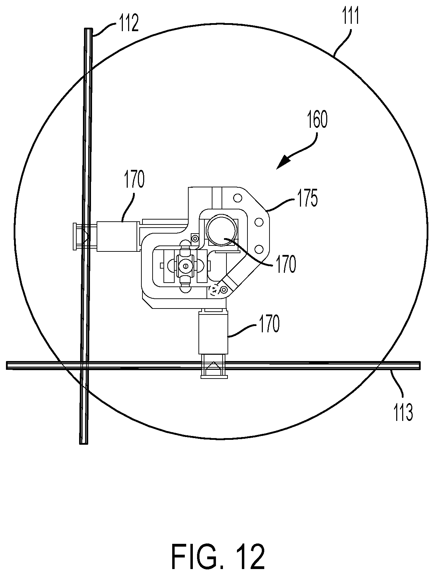

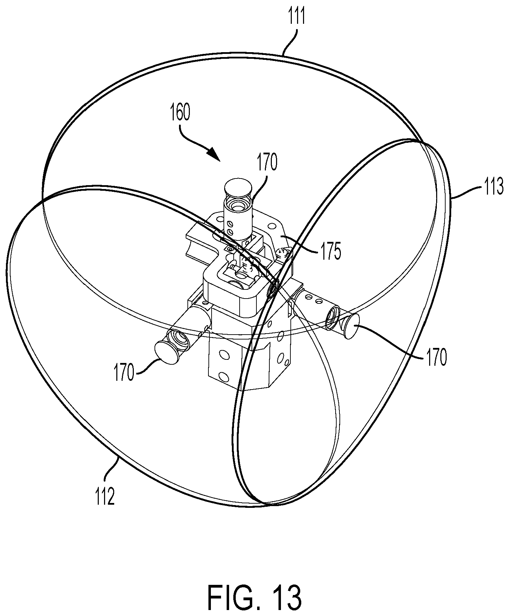

Figs. 12 and 13 illustrate a laser module assembly 160 which produces the laser lines 111, 112 and 113 that project out of the three laser projectors 101, 102 and 103, respectively. The laser module assembly 160 is housed in the housing 110 of the laser level 100. The laser module assembly 160 includes three laser modules 170. The three laser modules 170 are carried on a pendulum assembly 175. Each laser module includes a laser generator such as a laser diode and a reflector such as a cone reflector. The laser diode produces a laser beam which is reflected off the surface of the reflective cone to project laser lines 111, 112, and 113 at the three laser projectors 101, 102 and 103. The laser generator may include a diode pumped solid state laser (DPSSL).

The pendulum assembly 175 rotates about a relatively small angle so that the laser modules 170 project beams in the horizontal and vertical planes when placed on a surface that is not entirely horizontally flat. For example, if the laser level 10 is placed on a surface that is sloped five degrees (5 degrees) with respect to horizontal, the pendulum assembly 175 will tilt under the influence of gravity so that the laser modules 170 are aligned to produce a laser line 111 in a horizontal plane and laser lines 112 and 113 in vertical planes. Additionally, in some embodiments the laser level 100 includes a locking device to lock the pendulum assembly 175. In those instances the pendulum assembly 110 will be locked in a particular position rather than allowed to rotate under the influence of gravity and it may produce laser lines offset from the vertical and horizontal.

The laser lines 111, 112, 113 project out from the laser level 100 onto walls, floors ceilings or other surfaces. As there are three beams which project in a circular pattern, the laser level 100 may be referred to as a 3x360 laser level. When the laser level assembly 10 is attached to a vertical wall at the mounting portion 203, the laser level 100 produces two vertical laser lines and one horizontal laser line. Similarly, when the laser level assembly is placed on a flat horizontal surface, the laser level 100 produces two vertical laser lines and one horizontal laser line. In some instances, the laser level 100 may be considered to be located at a front of the laser level assembly 10 and the mounting portion 203 at the back of the laser level assembly 10.

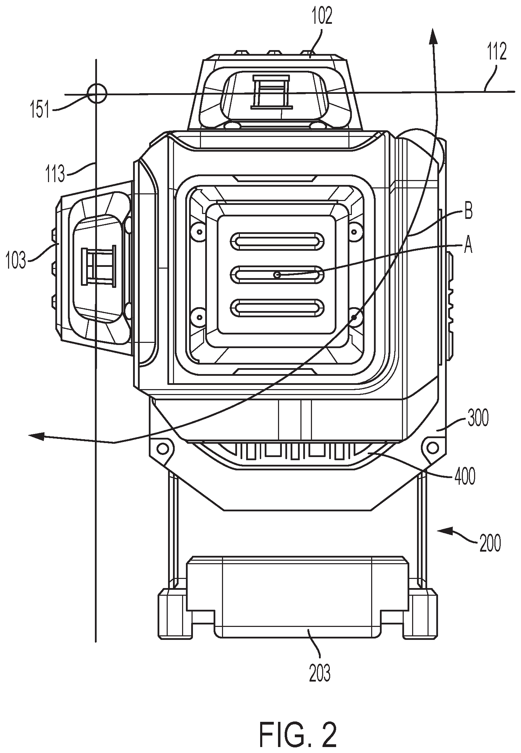

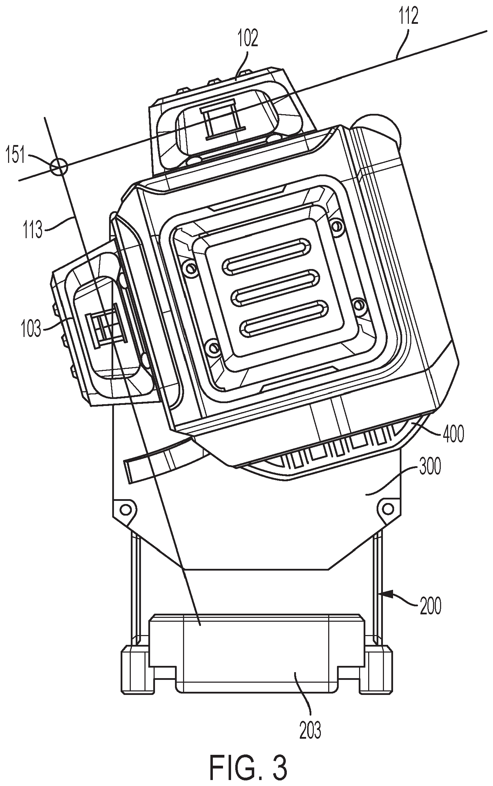

Figs. 1-3 illustrate various views of the laser level assembly 10. Fig. 1 is a perspective view of the laser level assembly 10 and Figs. 2 and 3 are top views of the laser level assembly 10. The laser level assembly 10 includes the laser level 100. The laser level 100 is situated on a rotational base 300. The laser level 100 and the rotational base 300 are mounted on a bracket 200. The bracket 200 has a mounting portion 203, a base portion 204, and a bottom of the mount 205 at the bottom of the base portion 204. The mounting portion 203 may include magnets so that the bracket 200 can be secured to a metal part such as metal beam, metal stud, metal cabinet or other structure. In other embodiments, the mounting portion 203 may have another securing mechanism instead of or in addition to magnets, such as a clamp, tie, strap or other securing structure.

In operation, the laser level 100 and rotational base 300 may move together about a central axis of the laser level 100 relative to the mount 200. The central axis "A" of the laser level 100 is a vertical axis through the projector 101. In this case, all three projectors 101, 102 and 103 rotate about the central axis. Since the projector 101 projects a horizontal line 111, rotation about a vertical axis does not affect the location of the line 111. That is, a horizontal line 111 remains horizontal. The vertical lines 112 and 113 rotate about the central vertical axis A. Both vertical lines as well as a cross point 151 at which the vertical lines 112 and 113 intersect rotate about the vertical axis Z.

The laser level 100 may also be rotated relative to the rotational base 300. In that instance, the rotational base 300 remains stationary relative to the mount 200. The laser level 100 rotates relative to the rotational base about the cross-point 151. In this instance, the vertical lines 112 and 113 move as they rotate about the cross-point 151. However, a position of the cross-point 151 remains the same since the vertical lines 112 and 113 rotate about the cross point. As with rotation about central axis A, when the laser level 100 rotates about the cross-point 151, the projector 101 continues to project a horizontal line 111 in a horizontal plane regardless of the rotational position.

Rotation of the laser level 100 about the cross-point 151 is shown in Figs. 2 and 3. As shown in Fig. 2, the laser level 100 can rotate about cross-point 151 in the rotational direction "B". As shown by arrow B, the laser level 100 may rotate in either a clockwise or counterclockwise direction. Figs. 2 and 3 are top view of the laser level assembly 10. Fig. 2 illustrates the laser level 100 in a starting position. In this position, the laser level 100 is aligned with the rotational base 300 and the mount 200. For example, the vertical line 111 is parallel to side surfaces of the mount 200. In the starting position, vertical line 112 is parallel to a mounting surface on which the mounting portion 203 is secured if the mounting surface is a flat vertical surface such as a wall.

Fig. 3 illustrates the laser level 100 rotated about the cross-point 151 relative to the starting position shown in Fig. 2. As shown in Fig. 3, the laser level 100 is rotated relative to the rotational base 300. The orientation of the vertical laser lines 112 and 113 also change. For example, when the mounting portion 203 is secured to a flat vertical mounting surface, laser line 112 is no longer parallel to sides of the mount 200 and vertical line 112 is no longer parallel to the mounting surface, but instead are at angles with respect to such surfaces. As also shown, the laser level 100 is angled with respect to the rotational base 300. While the position of the projector 101 has moved in Fig. 3 relative to Fig. 2, the projector 101 continues to project a horizontal line 111 in the same horizontal plane whether in the rotational position of Fig. 2 or Fig. 3.

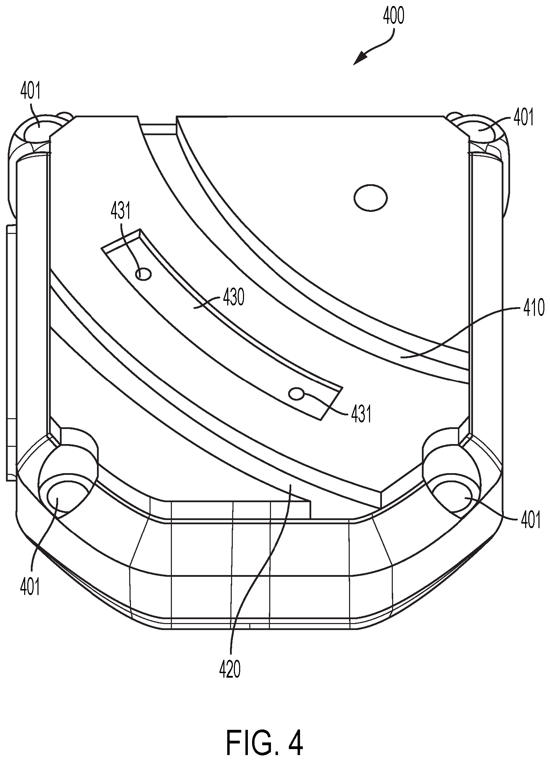

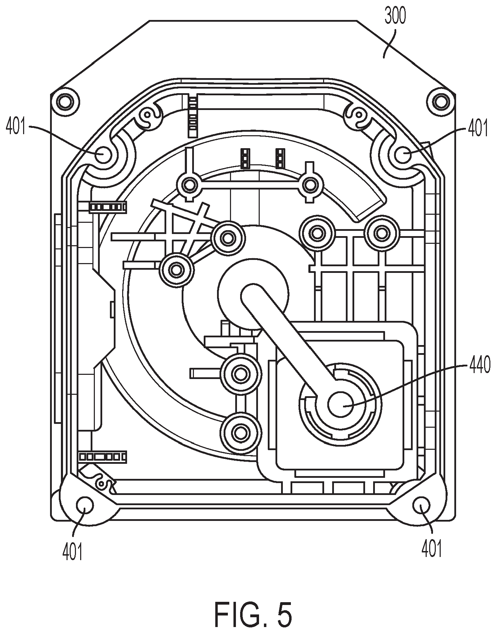

Figs. 4 and 5 illustrate a lower housing section 400 of the laser level 100. Fig. 4 is a bottom view of the lower housing section 400. The surfaces shown in Fig. 4 face downwardly towards the rotational base 300. Fig. 5 is a top view of the lower housing section 400, as would be seen looking down at the lower housing from an inside of a housing the laser level 100.

As shown in Fig. 4. The lower housing section 400 has a first guide way 410, a second guide way 420 and an arc gear connection slot 430. The arc gear connection slot 430 includes a pair of connection through holes 431. The connection through holes 431 each accommodate a fastener or connector and may be threaded. The lower housing section also includes a hole 440 through which cables may pass. The cables may be wires and may carry electric power or information/data. The loser housing section 400 also includes screw thread holes 401 at each corner. The thread holes 401 allow the lower housing section 400 to be screwed onto the remainder of the housing for the laser level 100. In other embodiments, the lower housing section 400 may be attached in other ways, may be integrally formed with other parts of the laser level 100 housing or various other clam-shell arrangements or attachments may be implemented.

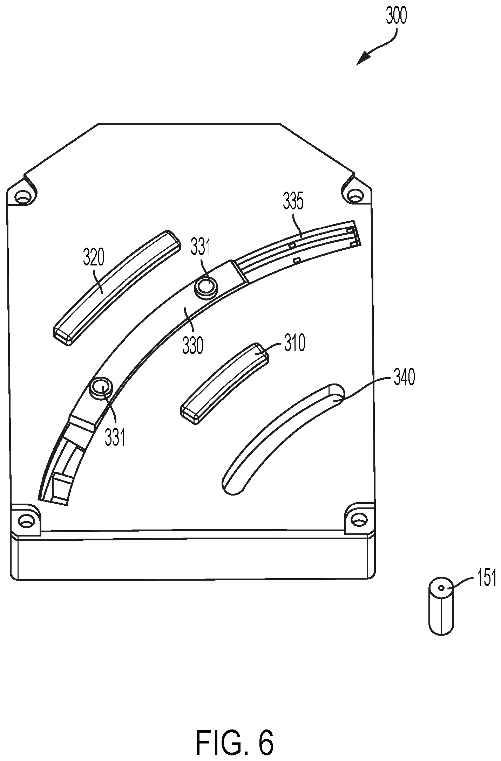

Fig. 6 is a top perspective view of the rotational base 300. As shown, the rotational base 300 includes a first guideway boss 310. The first guideway boss 310 engages and sits in the first guide way 410 and can move within the first guide way 410 illustrated in Fig. 4. The rotational base 300 also includes a second guideway boss 320. The second guideway boss 310 engages and sits in the second guide way 420 illustrated in Fig. 4 and can move within the second guide way 420. The rotational base further includes an arc gear 330 that is movable within an arc gear slot 335. The arc gear 330 is attached to the lower housing section 400 at the arc gear connection slot 430. The arc gear 330 may be secured to the slot 430 via connection through holes 331 on the arc gear 330 and connection through holes 431 in the arc connection slot 430. For example, fasteners may be inserted through the holes to securely fasten the arc gear 330 to the arc gear connection slot 430. These may be threaded fasteners, rivets or other connectors. The arc gear 330 may be secured to the arc gear connection slot 430 by other means.

The complementary structures of the lower housing 400 and the rotational base 300 allow for relative movement of the lower housing 400, and thus the laser level 100 generally, with respect to the rotational base 300. In particular, if the arc gear 330 moves in the arc gear slot 335, the lower housing 400 moves along with the arc gear 330 owing to the connection of the arc gear 330 with the lower housing 400. The bosses 310 and 330 slide along the respective guide ways 410 and 420. In this way, the arc gear 330 can be moved and cause the laser level 100 to rotate relative to both the rotational base 300 and the mount 200. When the arc gear 330 is moved within the slot 335 and the mount 200 is secured in place, the laser level 100 rotates such as between the positions shown in Fig. 2 and 3.

As shown in Fig. 6, the rotational base 300 also includes a cable transfer slot 340. The cable transfer slot 340 provides room for cables. Cables may carry electrical power or information/data. The cable transfer slot 340 may vary in size, shape, length or other dimensions and may include one or more through holes. Fig. 6 also illustrates the cross point 151. The arc gear 330 rotates in an arc about the axis 151. As shown, the axis 151 is outside of the footprint of the rotational base 300.

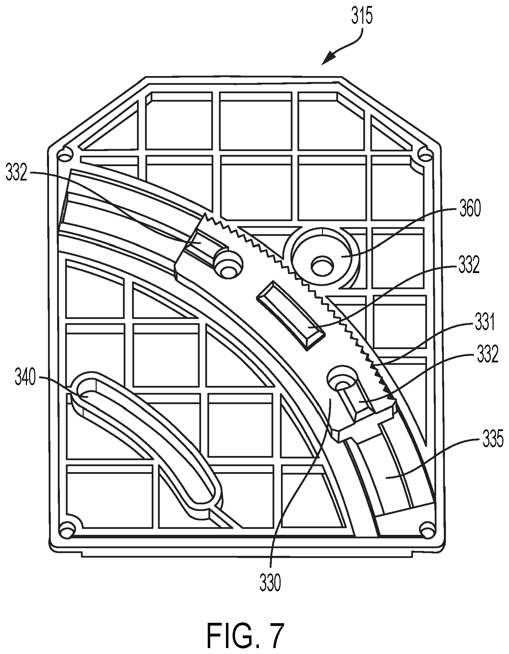

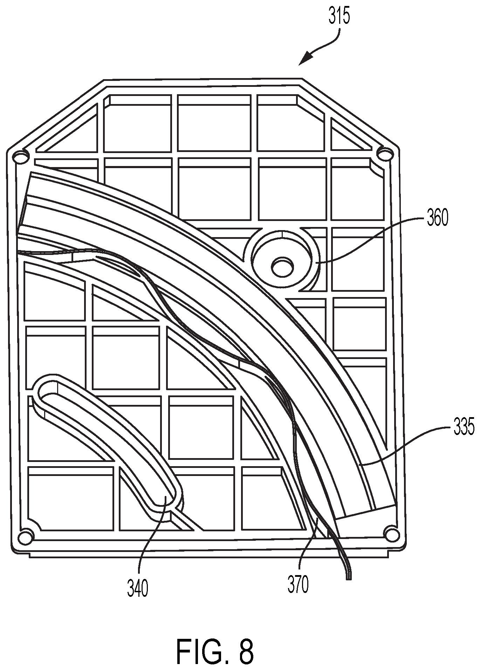

Figs. 7 and 8 illustrate the top section 315 of the rotational base 300. Fig. 7 and 8 are each perspective bottom view of the top section. The top section 315 of the rotational base 300 may be integrally formed with the rest of the rotational base 300 or may be attached through screws or other fasteners or fastening or attachment structures. Fig. 7 illustrates the top section 315 of the rotational base 300 with the arc gear 330 in the slot 335. As shown, the arc gear 330 includes a plurality of gear teeth 331 and several bosses 332. As shown, there is also a recess 368 for receiving a spur gear. As discussed below, a spur gear rotates and teeth of the spur gear interact with the gear teeth 331 in order to move the arc gear 330.

Fig. 8 illustrates the top section 315 with a biasing spring 370. The arc gear 330 is not illustrated in Fig. 8 for purposes of explanation. In an embodiment, the biasing spring 370 presses the arc gear 330 towards the spur gear to facilitate engagement between the gears. In some embodiments, other biasing members may be used instead of a spring 370 or engagement may be facilitated solely by the alignment by the respective tracks and recesses.

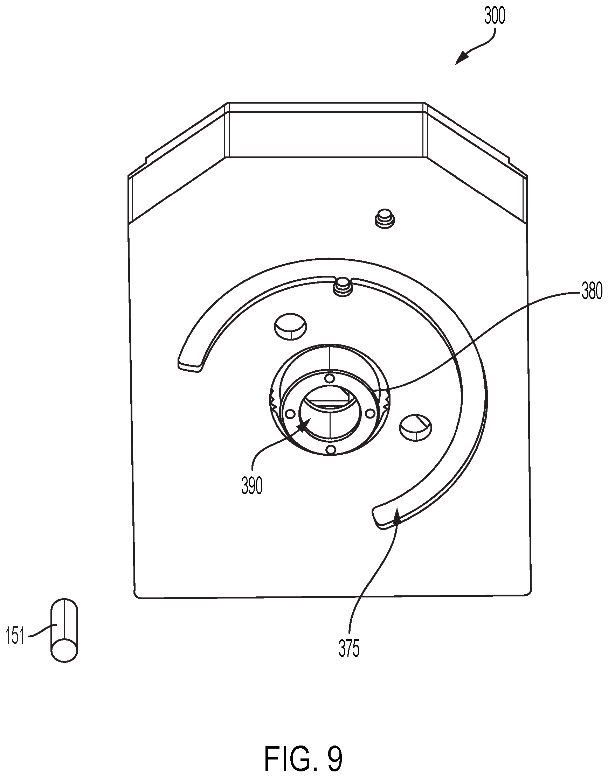

Fig. 9 is a perspective bottom view of the rotational base 300. As shown, the rotational base 300 has a mounting cylinder 380 with a central cable transfer hole 390. The rotational base 300 also has a central rotation guide way 375. The mounting cylinder 380 engages with the mount 200 and is aligned about the central axis A. The central rotation guide way 375 is similarly aligned about the central axis A. The cable transfer hole 390 allows cables to travel from the mount to the rotational base 300. Cables may also travel through or from the rotational base 300 to the laser level 100.

The mount 200 has a guide way boss that engages the central rotation guide way 375. The mount 200 includes a gear, belt, friction, direct drive that transfers rotational motion to the rotational base 300 so that the rotational base 300 rotates about the mounting cylinder 380 about central axis A, as described above. The laser level 100 moves along with the rotational base 300 when the rotational base 300 rotates about the central axis A. The central rotation guide way 375 may limit rotation of the rotational base 300.

In an exemplary embodiment, the mount 200 includes a motor. The motor includes an output that is engaged with the mounting cylinder 380. The motor output may be engaged with the mounting cylinder 380 through a threaded connection. A user can control the motor housed in the mount 200 and as the motor turns, the motor output rotates the rotational base 300 and so the laser level 100 about the central axis A. In some embodiments, there may be a transmission between the motor and the mounting cylinder 380. In other embodiments it may be a direct drive connection. In still other embodiments, a manual input may be used instead of or in addition to a motor.

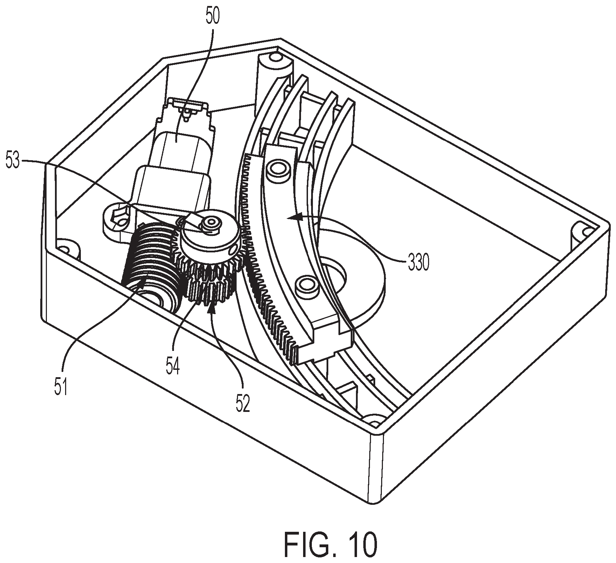

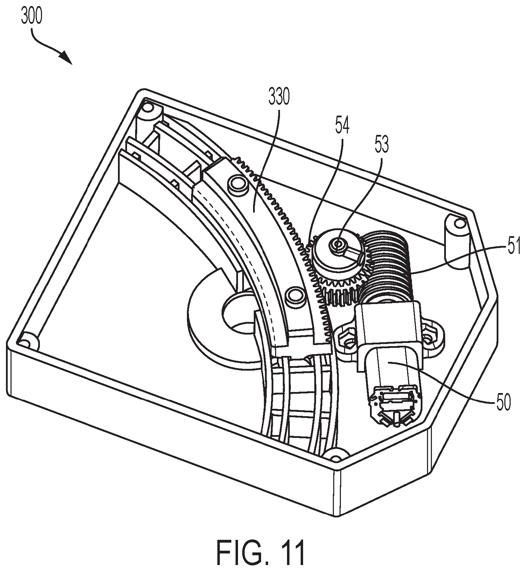

Figs. 10 and 11 are perspective internal views of the rotational base 300. As shown, the rotational base includes a motor 50. The motor 50 may be a micro motor. Additionally, there may be a quadrature encoder. The motor 50 drives a worm gear 51. The worm gear 51 drives a worm wheel 52. The worm wheel 52 is on a shaft 53 with a spur gear 54 so that when the worm wheel 52 rotates, the spur gear 54 likewise rotates. The spur gear 54 engages the arc gear 330. Accordingly, when the motor 50 is actuated, the arc gear 330 is moved to cause actuation of the laser level 110 about cross point 151, as described above. The motor 50 may rotate in a forward or reverse direction to move the arc gear 330 back and forth. In some embodiments, a transmission may be operably connected to the motor 50. In some embodiments a clutch may be operably connected to the motor 50.

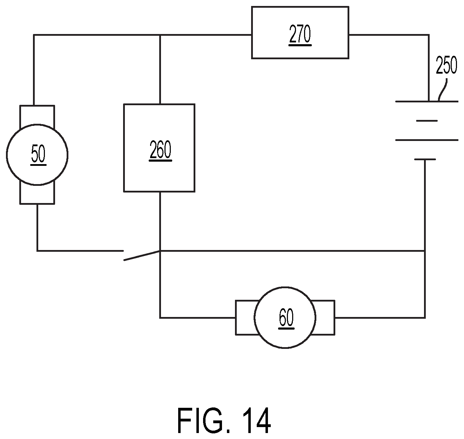

Fig. 14 illustrates a schematic diagram. A battery 250 is connected to controller 260, motor 50 and wireless transceiver 270. The controller 260 may include a microprocessor. The wireless transceiver 270 may receive wireless control signals from a user. The wireless control signals may be from a dedicated remote controller or from a computing device such as a tablet, computer or smartphone. The controller 260 may operate the motors 50 and 60 in accordance with the wireless control signals. In other embodiments, inputs for the control signals may be made from a wired connection or user input on the laser level assembly 10. In some embodiments, control signals may be provided wirelessly or from on-board user input on the laser level assembly 10. Motor 60 may be likewise connected to the battery 250 and controller 260. Motor 60 may be the motor disposed in the mount 200 for rotation about central axis A. Motor 60 may be similarly controlled by the controller 260 in accordance with user inputs. Wireless signals may be, for example, Wi-Fi signals, infrared signals, radio frequency (RF) signals or may use a Bluetooth protocol.

The battery 250 may be an internal battery or a removable power tool battery pack such as is generally known in the power tool construction space and may be compatible with other tools, such as drills, saws, sanders and impact drivers and power such tools. For example, the battery pack 250 may be of the type shown and described by U.S. Patent No. 8,092,932; US Patent No. 7,719,234; or U.S. Patent No. 6,729,413. U.S. Patent No. 8,092,932; US Patent No. 7,719,234; and U.S. Patent No. 6,729,413 are hereby incorporated by reference in their entireties. If the battery 250 is a removable battery pack, it may be slidingly engaged on the laser level 100 or a portion of the mount 200. If disposed on the mount 200, the removable battery pack may be disposed on the bottom of the mount 200, between the mounting portion 203 and the laser level 100 and base 300, or at another location. Cables such as wires may transfer electrical power from the battery pack 250 to the various components of the laser level assembly 100, including to any laser diodes, controllers, motors, or other electrical components. Electrical connections may be made by other means. The battery pack 250 may include lithiumion battery cells, though embodiments are not limited thereto.

In some embodiments, there may be more than one battery pack or battery that may provide power to one or more electrical components. For example, in some embodiments, there may be an internal battery for powering laser diodes and a removable battery pack for powering motors. Other embodiments may have the reverse in which an internal battery pack powers the motors and a removable battery pack powers the laser diodes. In other embodiments, there may be multiple internal batteries for powering various components. In some embodiments, a removable battery pack may power both the laser diodes and the motors and a separate battery, such as an internal battery, may power one or more of a controller or a wireless transceiver.

Internal batteries may be located in any suitable component such as the mount 200, base 300 or the laser level 100. Similarly, the controller 260 and wireless transceiver 270 may be disposed in any suitable location or component, and electrical connections made as necessary throughout the laser level assembly 10.

In some embodiments, the laser level 100 may be a different type of laser level other than a 3 x 360 laser level. For example, the laser level may be a cross line laser level. The laser level may project a variety of beams or dots.

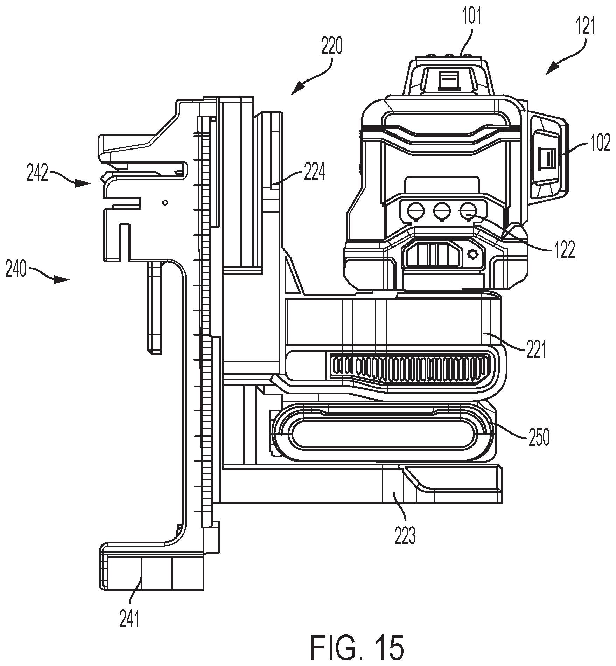

Figs. 15-29 illustrate exemplary embodiments of laser level assemblies that incorporate vertical movement. The vertical movement allows the height of a laser level beam to be adjusted by a user. For example, a horizontal line projected by a laser level may be moved up or down to create a horizontal line higher or lower on a wall. Various features of the exemplary embodiments of Fig. 15-29 may be combined or integrated with previously described embodiments. Also, like the previously described exemplary embodiments, the laser level is described with respect to a 3 x 360 laser level that projects one horizontal and two vertical beams. However, other laser levels with various lines and dots, including cross-lines, and plumb dots, may be utilized.

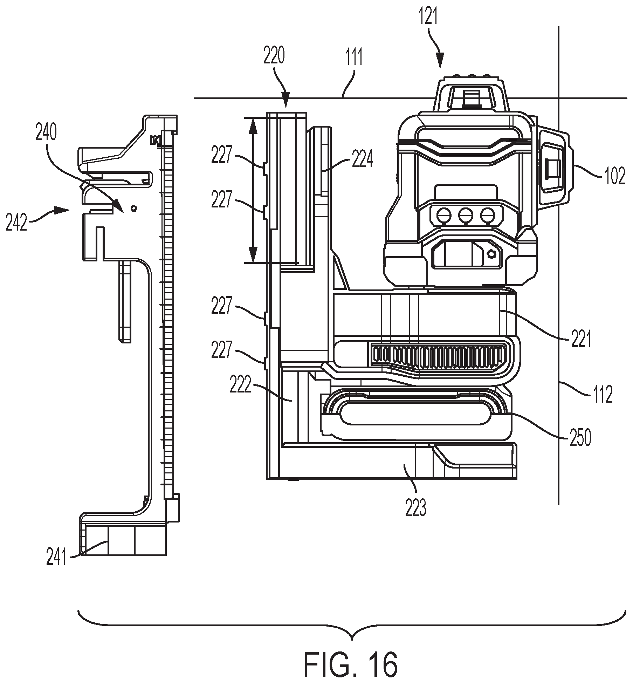

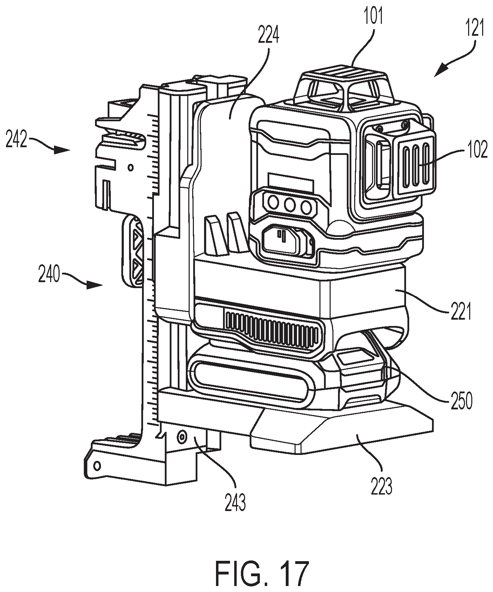

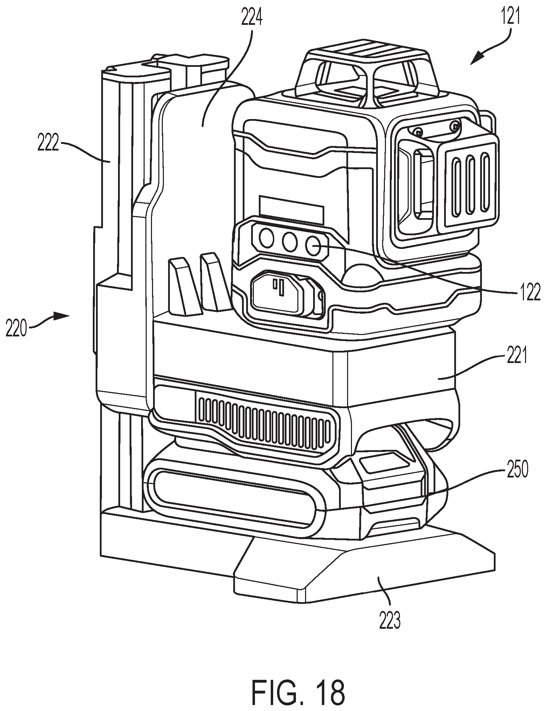

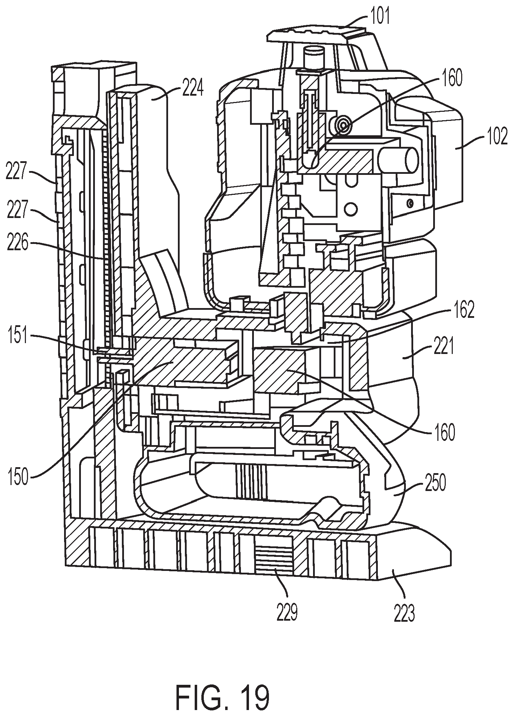

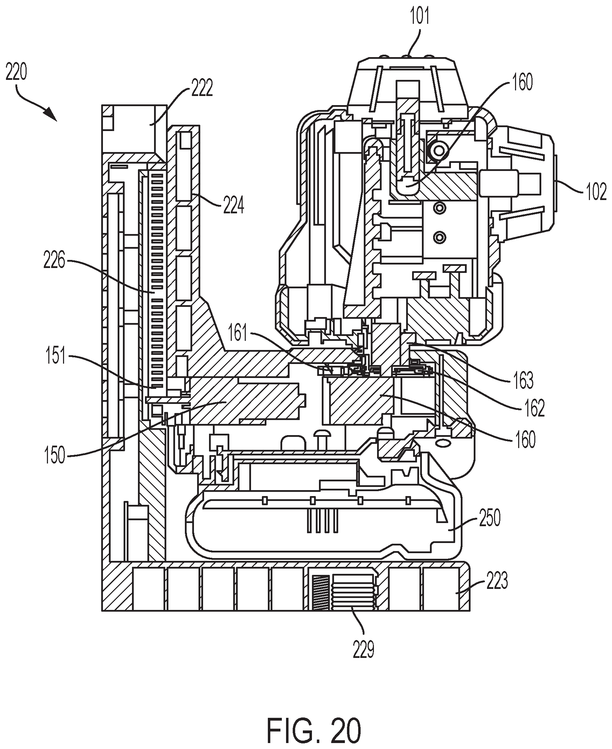

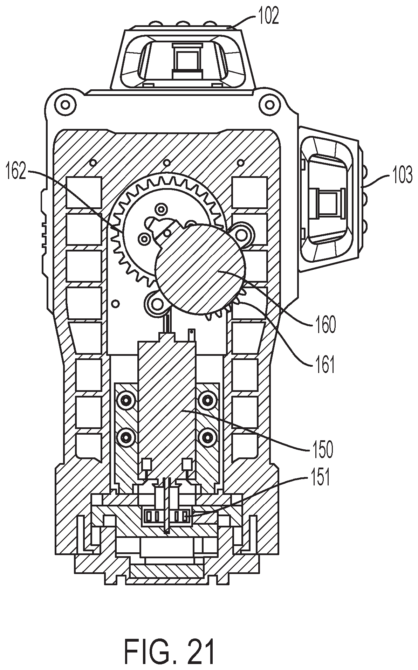

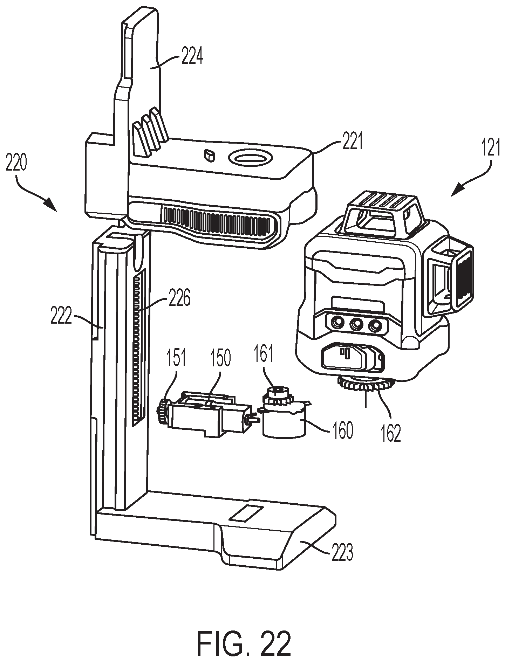

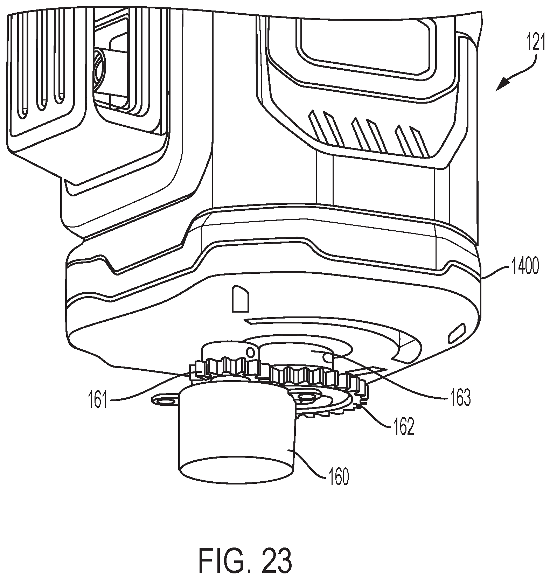

A first exemplary embodiment of a vertically translating laser level assembly 11 is shown in Figs. 15-23. Fig. 15 illustrates a side view of the laser level assembly 11. Fig. 16 is a side view of the laser level assembly 11, with the ceiling wall mount 240 separated from the mounting bracket 220. Fig. 17 is a perspective view of the laser level assembly 11 with the ceiling wall mount 240. Fig. 18 is a perspective view of the laser level assembly 11 without the ceiling wall mount 240. Fig. 19 is a perspective cut-away view of the laser level assembly of Fig. 18. Fig. 20 is a side cut-away view of the laser level assembly. Fig. 21 is a bottom cut-away view of the laser level assembly 11 through a portion of the bottom of the mounting bracket 220. Fig. 22 is an exploded view of parts of the laser level assembly 11. Fig. 23 is a close-up view of a rotational driving feature of the laser level assembly 11.

As shown in Figs. 15, the laser level system 11 includes a laser level 121. The laser level 121 is generally similar to the laser level 100 of Fig. 1. In general, parts of laser level 121 should be assumed to be the same as laser level 100 unless otherwise shown or described. In the exemplary embodiment of Fig. 15, the laser level 121 has a different bottom section 400 than the laser level 100 of Fig. 1. It is specifically contemplated that the laser level assembly 11 of the embodiment of Fig. 15 may include the base portion 400 and rotational base 300 of the embodiment of Fig. 1 so as to facilitate rotation about two different axes, as described above. In that instance, the laser level would be able to travel vertically and rotate about both a central axis and a cross-point axis. The laser level 121 may be removably attached to the base 221.

As shown in Figs. 15 and 16, the laser level 121 includes a variety of buttons 122 for user input and control. The buttons 122 may allow the user to turn on and off the various lasers that project out of projectors 101, 102, 103. The buttons 122 may also allow a user to operate rotational or vertical motor control. As discussed above, there may be wireless controls instead of or in addition to such on board buttons 122 serving as user controls. Any function of the laser level 121 or the laser level system 11 may be controlled by one or more of wireless control, on-board controls or wired control. As discussed above, a remote control device for controlling functions wirelessly may include one or more of a dedicated remote control or a computing device such as a smartphone or tablet, though embodiments are not limited thereto. The remote control device may include a user input such as a touchscreen, a keyboard or buttons. The remote control device may include a controller including, for example, a microprocessor. The remote control device may include a display configured to display information about the laser. For example, the remote control device may display whether one or more lasers is activated. The remote control device may display the type of laser. The remote control device may display a state of a battery charge. The remote control device may display a speed of rotation or vertical translation. The remote control device may display a state of rotation or vertical translation. The remote control device may display rotational or vertical position.

As shown in Figs 15 and 16, the laser level system 11 further includes a vertical mounting bracket 220 and a ceiling wall mount 240. The ceiling wall mount 240 may include a clamp 242 for clamping onto a structure such as a pipe, beam or other structure. Additionally, the ceiling wall mount 240 may have a threaded screw hole 241 for mounting to a tripod or other structure.

The vertical mounting bracket 220 includes a base portion 221, a mounting portion 222, a bottom portion 223 and a movable mount portion 224. The laser level 121 and a removable power tool battery pack 250 are mounted on the base portion 221. The mounting portion includes a number of magnets 227. The magnets 227 allow the vertical mounting bracket 220 to be mounted to a surface or the ceiling wall mount 240, which includes a metal plate surface 243. The bottom portion 223 may have a screw thread hole 229 as shown in Figs. 19 and 20 so that the vertical mounting bracket 220 may be mounted to a tripod or other structure.

The removable power tool battery pack 250 may be of various voltages, capacity or sizes. For example, the base portion 221 may receive any of a variety of power tool battery packs in a power tool battery pack system or a sub-set of power tool battery packs of a power tool battery pack system. For example, the distance between base portion 221 and bottom portion 223 may be made large enough to receive all of the battery packs of a particular power tool battery pack system or any of a select number of battery packs of a power tool battery pack system. In some instances, the amount of vertical translation may be affected by the size of the battery pack 250. For example, a large battery pack 250 may limit movement of the base portion 221 towards the bottom portion 223 because the battery pack 250 contacts the bottom portion 223. In this instance, a clutch may help to prevent further movement downward.

In some embodiments, a sensor may sense when a positional limit is reached and prevent further movement of the laser level 121. For example, one or more sensors may sense when a position a positional limitation has been reached. For example, a sensor including a contact switch may be included on the bottom portion 223 and when the battery pack 250 contacts the contact switch, the controller 260 may prevent further movement or downward movement of the base portion. In some embodiments, the sensor may include a light sensor. In some embodiments, a sensor may include a Hall sensor.

Fig. 17 illustrates the vertical mounting bracket 220 mounted to the ceiling wall mount 240 via magnetic attraction.

Operation of the laser level assembly 11 will be described with respect to Figs. 19 to 23. Fig. 22 illustrates an exploded view of the laser level 121 and vertical mounting bracket 220. Fig. 22 illustrates a motor 150 and pinion 151 driven by the motor 150. Fig. 22 also illustrates a motor 160 and gear 161 driven by motor 160. Although shown separately for illustrative purposes in Fig. 22, motor 150, pinion 151, second motor 160 and gear 161 are housed in the mounting bracket 220, and particularly, the base portion 221 of the mounting bracket 220, as seen in cut-away Figs. 19, 20 and 21. One or both of the motors 150 and 160 may include a clutch. The clutch may be an internal or an external clutch. A clutch may otherwise be attached to the motor or configured to work with the motor.

As also shown in Fig. 22, the mounting bracket 220 also includes a rack 226 in the mounting portion 222. The pinion 151 is engaged with the rack 222. Accordingly, when the motor 150 is activated, the pinion 151 rotates and causes the base 221 and movable section 224 of the mount 220 to move relative to the mounting portion 222. When the motor 150 and pinion 151 are rotated in a first direction, the base 221 moves upwardly and when the motor 150 and pinion 151 are rotated in a second direction, the base 221 moves downwardly. The movable mount portion 224 interacts with the mounting portion 222 to provide smooth sliding support. The mount portion 224 may include a variety of slots, grooves and projections and the mounting portion 222 may include corresponding slots, grooves or projections to facilitate relative sliding. For example, the movable portion 224 may include a pair of projections and the mounting portion 222 may include corresponding slots which receive the pair of projections.

The rack 222 and pinion 151 are also seen in the cut-away views of Figs. 19 and 20. In Figs. 19 and 20, the pinion is at a bottom of the rack and the battery pack 250 is resting near a bottom portion 223 of the mount.

In the exemplary embodiment of Figs. 15-23, the pinion 151 rotates about an axis perpendicular to a work surface on which the mounting portion 222 is mounted. As discussed above, the mounting portion 222 may also be mounted on a metal plate 243 of the ceiling bracket 240. In that case, the pinion 151 rotates about an axis perpendicular to the surface of the metal plate 243. The axis about which the pinion 151 rotates is also perpendicular to the central axis A and parallel to an insertion direction of the battery pack 250.

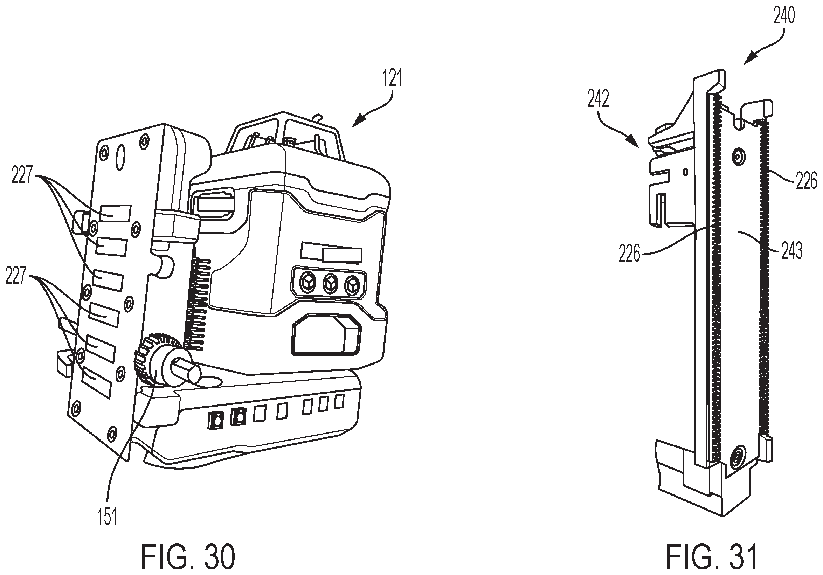

In other embodiments, the pinion 151 and rack 222 may be in different planes. For example, as shown in Figs. 30 and 31, the rack 222 may be on one or both sides of the metal plate 243. Additionally, the pinion 151 may rotate about an axis parallel to a rear surface of the mounting portion 222.

Motor 160 is a configured to rotate the laser level 121. As shown in Fig. 23, motor 160 drives gear 161. Gear 161 meshes with gear 162 so that when the motor 160 rotates, gear 162 rotates. Gear 162 is secured to a cylindrical mount 163 of the laser level 121. Accordingly, the motor 161 drives rotation of the laser level 121. The motor 161 may rotate clockwise or counterclockwise to rotate the laser level 121 in opposite direction.

Motors 150 and 160 may be controlled by controller 260, as previously described. Additionally, the assembly 121 may receive remote wireless signals through a wireless transceiver 270. Electrical connection may be made through the various components to convey electrical power and/or control information through wires or other structures. Battery pack 250 may power the motors 150, 160 any laser generators or other components. As discussed above, additional batteries may be used in some instances to power various components.

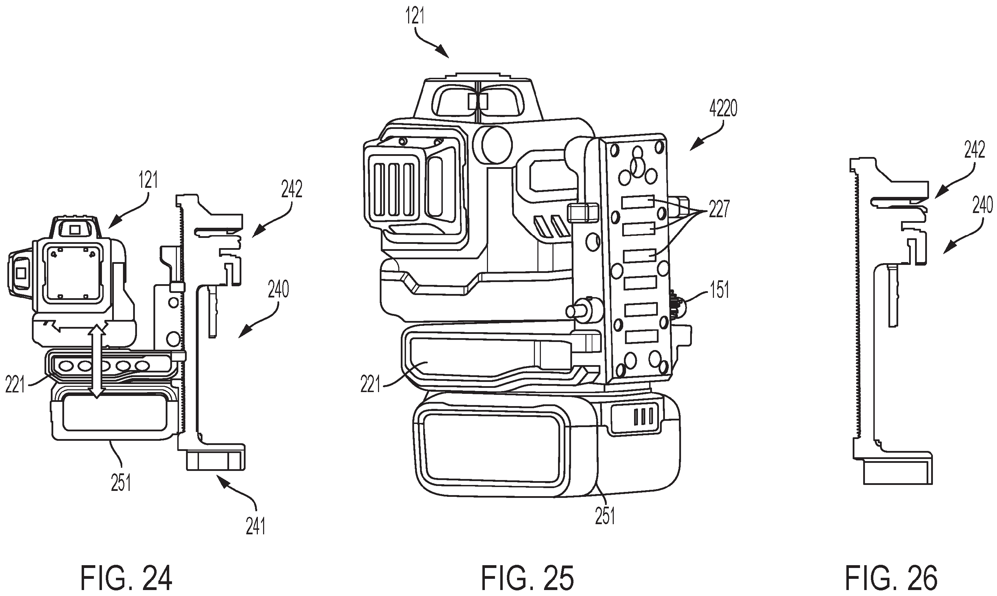

Figs. 24-31 illustrate various different modifications to provide for different configurations. Operation of the vertical translation feature and the laser level generally is the same as in previous embodiments.

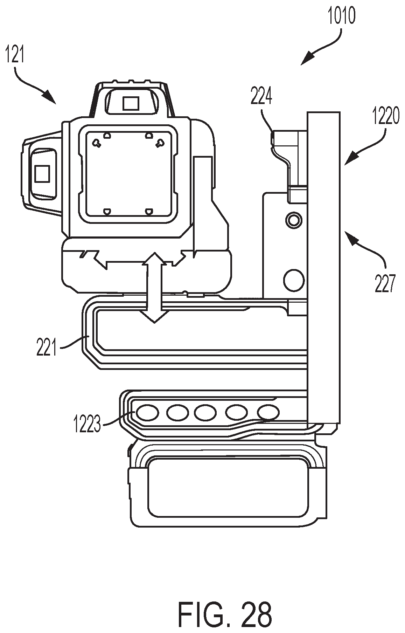

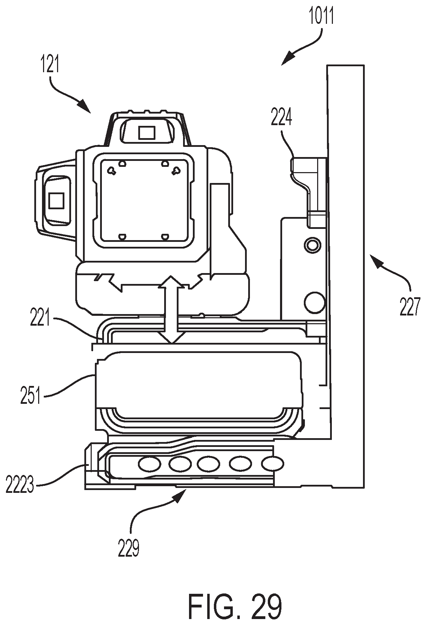

Fig. 28 and 29 illustrate other configurations for a laser level assembly 1010 and 1011 with mounting brackets 1220 and 2220. In Figs. 28 and 29, the battery pack 251 is mounted to a modified bottom portion 1223 and 2223 of the respective mounting brackets 1220 and 2220 rather than to the mounting portion 221. The battery pack 251 may be mounted to a bottom of the modified bottom portion 1223 so that the battery pack 251 is generally below the bottom portion 1223, as shown in Fig. 28, or to a top of the modified bottom portion 1223 so that the battery pack 251 is generally above the bottom portion 1223, as shown in Fig. 29. In any event, the controller 260 and transceiver 270 may be housed in any available location of the mount 220 and connections made through conventional means. As shown, the exemplary embodiments of Figs. 28 and 29 include magnets 227. The magnets 227 allow the mounting brackets 1220 and 2200 to be mounted to a metal work surface or to a ceiling mount such as ceiling mount 240 with a metal plate 243.

Figs. 24, 25, 26, 30 and 31 illustrate another exemplary embodiment. the previously described exemplary embodiments, a motor causes one portion of the mounting bracket moved relative to another portion of the mounting bracket. In the exemplary embodiment of Figs. 24, 25, 26, 30 and 31, a motor moves the mounting bracket 4220 relative to a ceiling mount 240. In this instance, motor 150 drives a pinion 151. The pinion 151 is located in a position to engage a rack located on the ceiling mount 2240. As shown, the rack 226 is on either side of a metal plate. Accordingly, the mounting bracket 4220 may be secured to the metal plate 243 of the ceiling mount 240. This brings the motor driven pinion 151 into engagement with a rack 222 on the ceiling mount 240. When the motor 150 drives the pinion 151, the mounting bracket 4220 is moved up and down relative to the ceiling mount 240. A sensor may be used to determine a location of the mounting bracket 4220. For example, a magnetic sensor may be included on the ceiling mount 240 and a magnet for providing a signal to the magnetic sensor may be included on the mounting bracket 4220. The sensor may be used to help control the vertical movement of the mount 240 and may be used to provide information about a vertical location to a user. For example, the sensor may be used to sense when a top or bottom position is reached and the controller 260 may then prevent further movement. As shown in, for example, Figs. 24, 26 and 31, physical projections may also limit upward and downward movement of the mounting bracket 4220.

In this embodiment, the mounting bracket 4220 is somewhat simplified because it does not require parts that are vertically movable with respect to one another. Instead, the mounting bracket 4220 is a simple L-shaped bracket with an added motor 150 and pinion 151. This embodiment uses a larger battery pack 251 which serves the same function as the battery pack 250. Either battery pack 250 or 251 may be used in this and other embodiments and the mount 221 may accept battery packs of a variety of sizes, types or voltages. As shown in, for example, Figs. 24 and 25, the battery pack 251 may be mounted to the mounting portion 221 and there may be empty space below the battery pack 251. The mount 4220 may include a plurality of magnets 227. The magnets 227 may have a rectangular shape. As shown, the magnets 227 may be mounted on a portion transverse to the mounting portion 221.

The modified mount 4220 includes a pinion 151 that rotates about an axis parallel to a rear surface of the mounting portion.

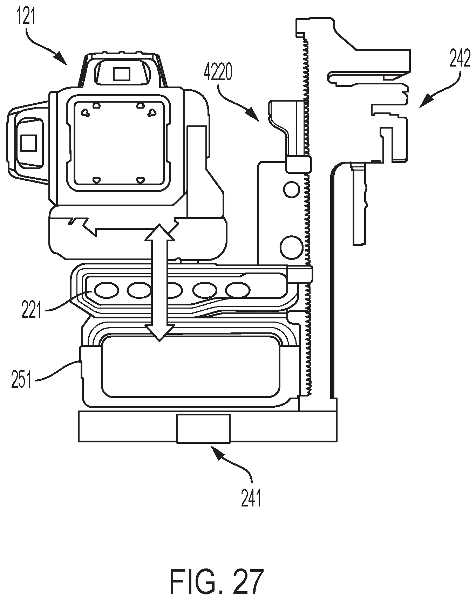

Fig. 27 is another exemplary embodiment. The exemplary embodiment of Fig. 27 is the same as the exemplary embodiments of Figs. 24, 25, 26, 30 and 31, except that the tripod mount 241 of the ceiling bracket 240 is in a different location below the battery pack 251 and base portion 221 of a mount.

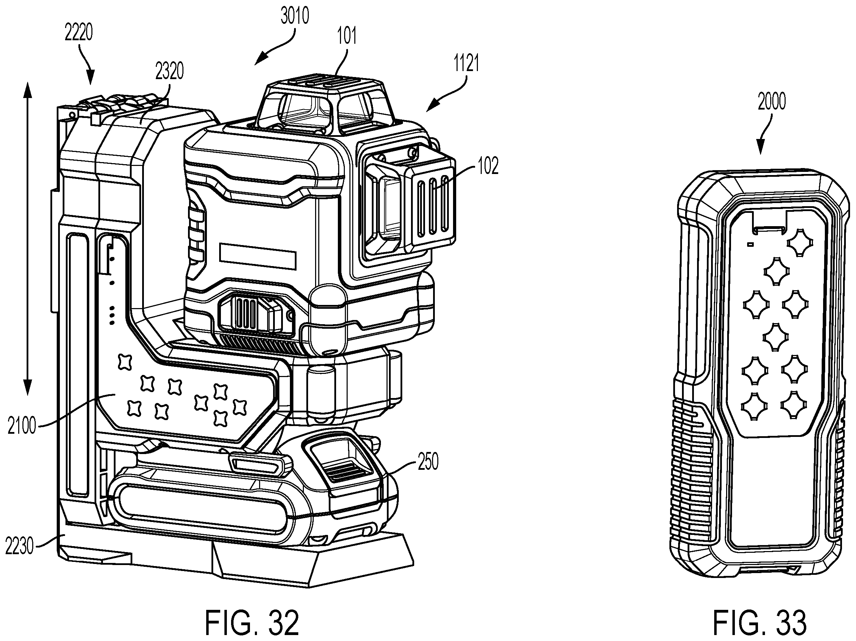

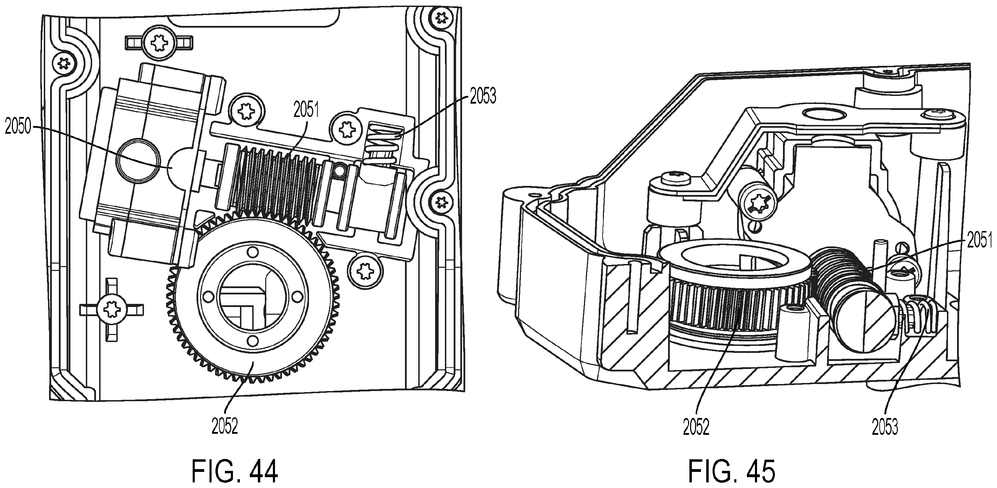

Figs. 32-47 illustrate another exemplary embodiment of a laser level assembly 3010. The laser level assembly 3010 has components, elements, parts and functions similar to other exemplary embodiments unless otherwise shown or described. Additionally, components, elements, parts and functions of the exemplary embodiments may be substituted or combined as applicable.

As shown in Fig. 32, the laser level assembly 3010 includes a laser level 1121. The laser level 1121 has the same basic operation as previous exemplary embodiments of laser levels, such as laser levels 100 and 121. Laser level 1121 of the exemplary embodiment is a 3x360 laser level includes laser module 160 and projects three laser lines 111, 112 and 113. In other exemplary embodiments, the laser level 1121 may be another type of laser level and may project other lines and dots/spots. For example, the laser level 1121 may be a cross-line laser level and project a single horizontal laser line and a single vertical laser line. The laser level 1121 may be a cross and spot laser that projects crossing laser lines and at least one laser spot. The laser level 1121 may be a spot laser level that projects a number of spots, such as vertically upward and downward projecting spots, a forward projecting spot and left and right side projecting spots.

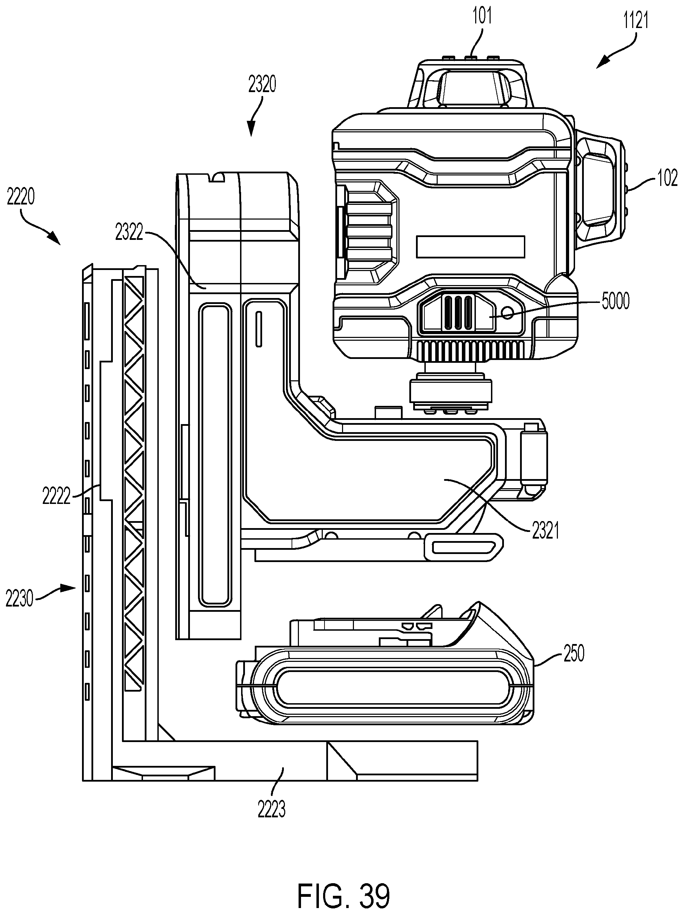

With reference to Figs. 32 and 39, the laser level assembly 3010 further includes a bracket assembly 2220. The bracket includes an attachment mounting bracket 2230 and vertical movement or movable mounting bracket 2320. The attachment mounting bracket 2230 includes a mounting portion 2222 and a base portion 2223. The mounting portion 2222 is generally transverse to the base portion 2223. The mounting portion 2223 is configured to be mounted to a structure. In the example embodiment, the mounting portion 2223 includes a plurality of magnets for mounting the mounting portion 2223 to an object. The mounting portion may alternatively or additionally include other mounting features, such as a clamp or strap.

The vertical movement mounting bracket 2320 is attached to the mounting bracket 2230 and translatable relative to the mounting bracket 2230. The movable bracket 2320 includes a base portion 2321 and an interface portion 2322. The interface portion 2322 is generally transverse to the base portion 2321. The laser level 1121 is rotatably connected to the base portion 2321 of the movable bracket 2320. In some embodiments, the laser level 1121 may be removably coupled to the movable bracket 2320. In such an example embodiment various different types of laser levels may be selectively attached to the base portion 2321 of the movable bracket 2320. For example, a 3 x 360 laser level may be removed and a cross-line, cross and spot or spot laser level may be attached to the movable bracket 2320 in its place. Thus, a user may use the same bracket assembly 2220 for a variety of different laser levels.

As shown in, for example, Fig. 32, the movable bracket 2320 may include a control panel 2100. The control panel 2100 may include a variety of buttons for controlling the laser level 1121 and laser level assembly 3010. For example, the control panel may include a power button for turning the laser level assembly 3010 on an off. The control panel 2100 may also include buttons to control operation of the laser lines or spots. For example, each of the laser lines 111, 112, 113 may be controlled separately or together. That is, for example, one button may turn on and off all of laser lines 111, 112, and 113. Also, separate buttons may separately turn on and off laser lines 111, 112, 113 so that any combination of laser lines 111, 112, and 113 may be on at a particular time. Additionally, the control panel 2100 may include buttons for controlling motion of the laser level assembly 3010. For example buttons may be included for controlling up and down movement of the movable bracket 2320 relative to the mounting bracket 2230. Control panel 2100 may also include buttons for controlling rotation of the laser level 1121 relative to the movable bracket 2320. Control panel 2100 may be used to control speed and direction of movement. Control panel 2100 may also be used to control intensity of the laser lines 111, 112, 113. As shown in Fig. 33, in the example embodiment there may also be a remote control 2000. The laser level assembly 3010 may additionally or alternatively be controlled by remote control 2000. That is, all of the functions described above with respect to the control panel 2100 may be implemented additionally or alternatively on the remote control 2000. For example, the remote control 2000 may be used to turn on and off each of the laser lines 111, 112, 113 and the intensity of the laser lines 111, 112, 113. The remote control 2000 may communicate with the laser level assembly 3010 wirelessly through one or more of a radio frequency (RF), infrared signal, WiFi, or a Bluetooth protocol, for example. The remote control 2000 may have a separate power source such as alkaline batteries.

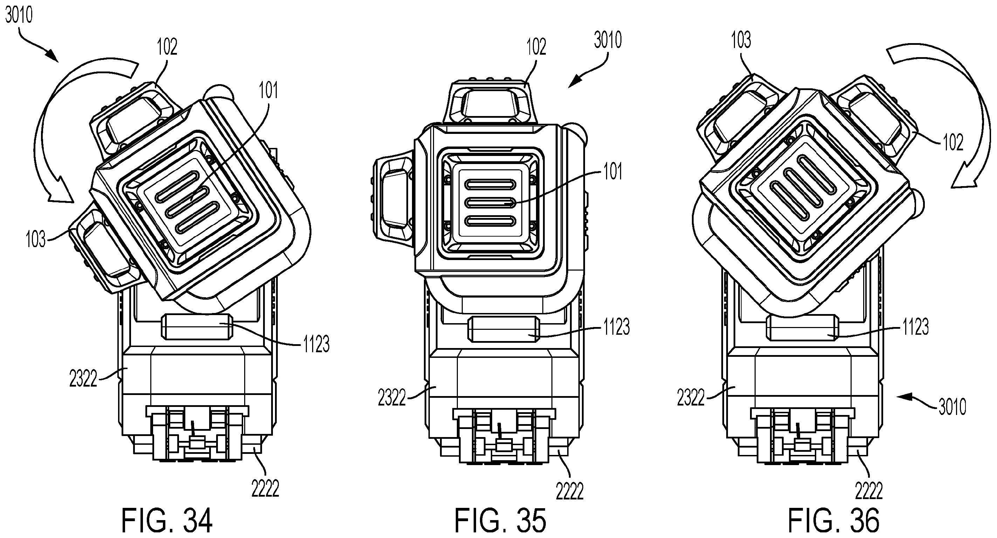

Figs. 34-36 illustrate rotation of the laser level 1121 relative to the mounting bracket 2220. Fig. 35 illustrates the laser level 1121 in a central position. In this central position, laser projector projects a laser line beam 112 generally parallel to a rear surface of the mounting bracket 2220 and laser line projector 103 projects a laser line beam 113 generally perpendicular to a rear surface of the mounting bracket 2220. Accordingly, if the mounting bracket 2220 is mounted to a flat vertical wall, laser line beam 112 will be projected generally parallel to the wall and laser line beam 113 will be projected generally perpendicular to the wall.

Fig. 34 illustrates laser level 1121 rotated to the left (counter-clockwise) and Fig. 36 illustrates laser level 1121 rotated to the right (clockwise). As shown, the bracket 2220 may include a stop 1123. The stop may limit rotational movement of the laser level 1121. As shown, in Figs. 34 and 36, a portion of the laser level 1121 may hit the stop 1123 and limit further movement. Rotational movement may also be limited by a controller such that the controller limits rotational movement to a certain range. The range of rotational movement of the laser level 1121 may be, for example, in a range of 5 to 90 degrees; 10 to 90 degrees 10 to 85 degrees; 15 to 60 degrees; 15 to 80 degrees, or 20 to 75 degrees.

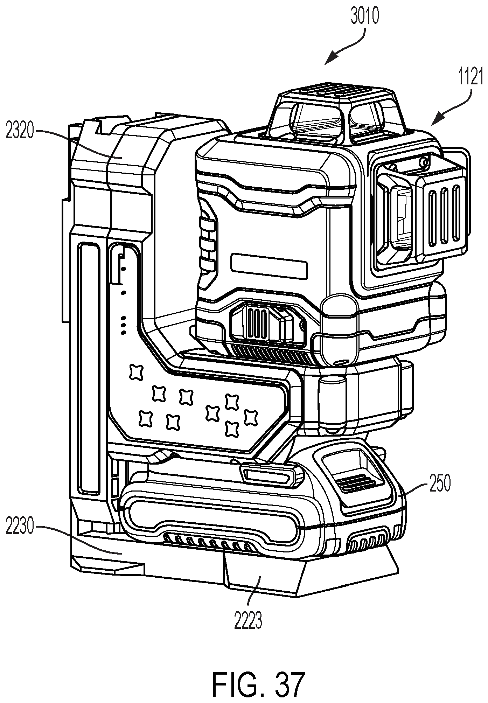

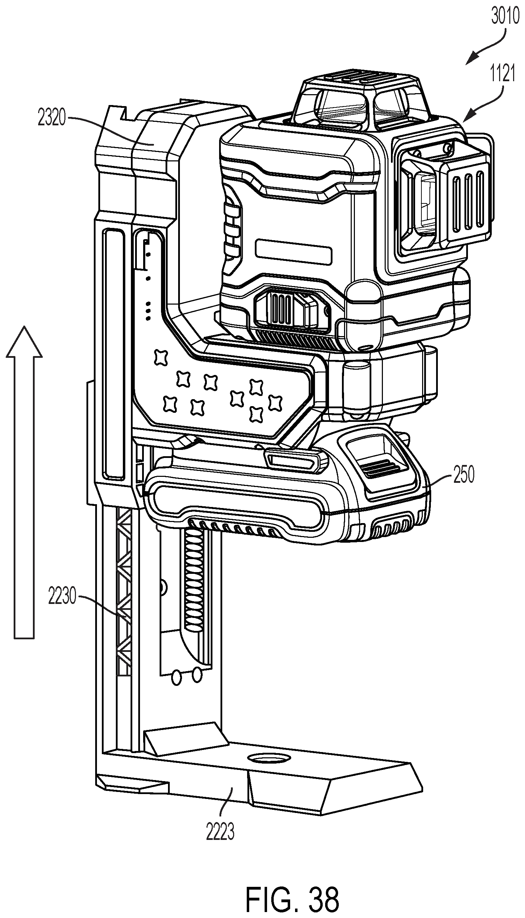

As shown in Figs. 37 and 38, the movable mount 2320 is translatable relative to the mounting bracket 2230. Since the battery pack 250 is removably attached to the movable mount 2320 and the laser level 1121 is mounted to a base of the movable mount 2320, the laser level 1121 and the battery pack 250 also translate along with the mounting bracket 2320. In particular, the movable mount 2320 is movable in a vertical direction up and down.

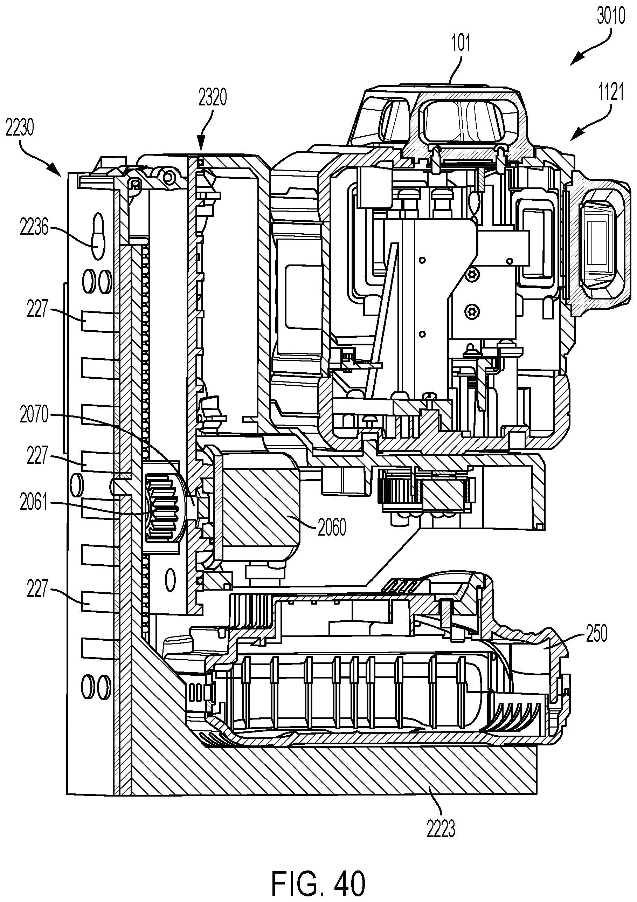

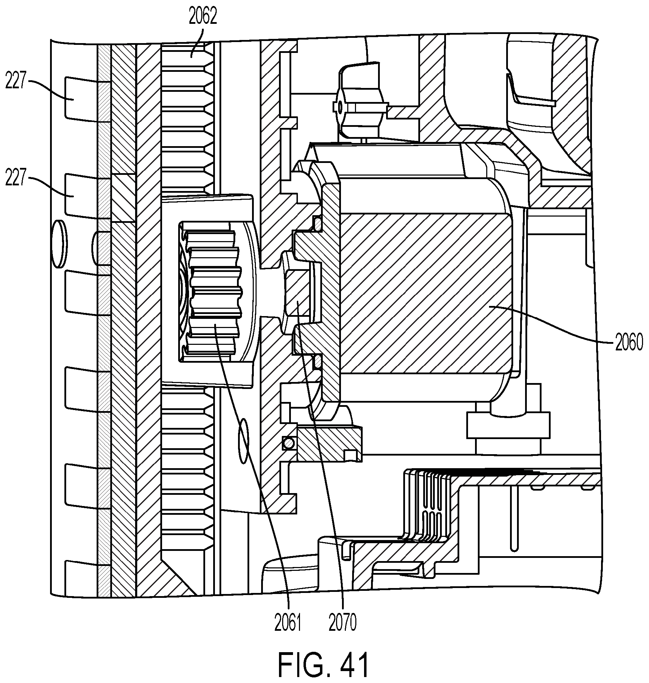

Fig. 40 is a cross-sectional view of the laser level assembly 3010 and Fig. 41 is a close-up cross-sectional view of a portion of the laser level assembly 3010 including a rack 2062 and pinion 2061.

As shown in Figs. 40 and 41, a motor 2060 is housed it the movable mount 2320. The motor 2060 may be a stepper motor. The motor may have a clutch 2070. A pinion 2061 is attached to an output of the motor 2060 and driven by the motor 2060. The pinion 2061 has gear teeth engaged with rack 2062. Accordingly, as the motor 2060 rotates in a first direction the pinion 2061 rotates in a first direction and moves the movable mount 2320 upwardly. When the pinion rotates 2061 in a second direction, opposite the first direction, the movable mount 2320 moves downwardly. Accordingly, operation of the motor 2060 causes upward and downward movement of the mount 2320 and so the laser level 1121 on the mount 2320. As discussed above, the motor 2060 may be controlled by the user through one or both of the control panel 2100 or the remote control 2000.

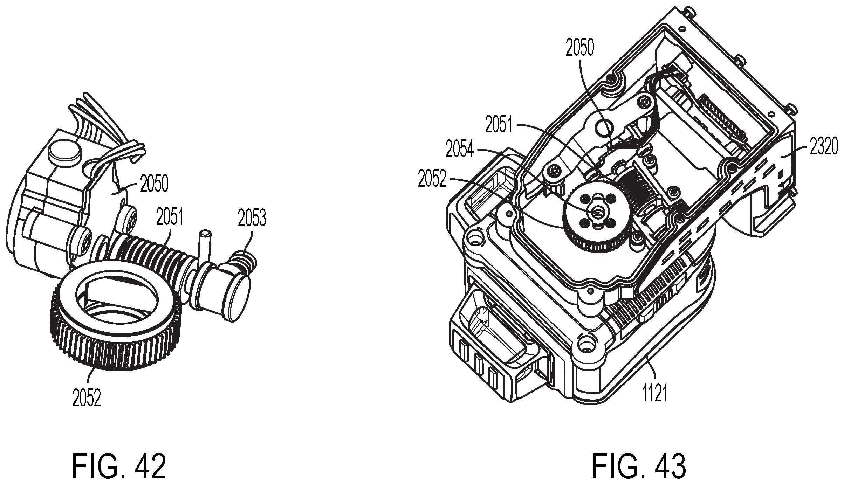

Figs. 42 to 45 illustrate components for facilitating rotational movement of the laser level 1121 relative to the movable mount 2320 and, in particular, relative to the base 2321 of the movable mount 2320. As shown, a stepping motor 2050 is mounted in the base 2321 of the movable mount 2320. The stepping motor 2050 drives a worm which may also be referred to as a worm screw. The worm screw 2051 drives a worm wheel 2052, which may also be referred to as a worm gear 2052. A spring 2053 biases the worm screw 2051 toward the worm wheel 2052 to facilitate contact between the teeth of the worm wheel 2052 and the worm screw 2051. The laser level 1121 is operatively connected to the worm wheel 2052 so that as the worm wheel 2052 rotates, the laser level 1121 rotates along with the worm wheel 2052. For example, a shaft 2054 may be fixedly connected to the worm wheel 2052 and the laser level so that the shaft 2054 rotates with the worm wheel 2052 and the laser level 1121 rotates along with the shaft 2054. In this manner, rotation of the second stepping motor 2050 causes rotation of the laser level 1121, as shown in Figs. 34-36. As shown, a rotational axis and longitudinal axis of the worm screw 2051 is disposed at an angle. That is, in an example embodiment, the rotational axis and longitudinal axis of the worm screw 2051 are not parallel or perpendicular to a rear surface of the mounting bracket 2220 that is attached to a wall.

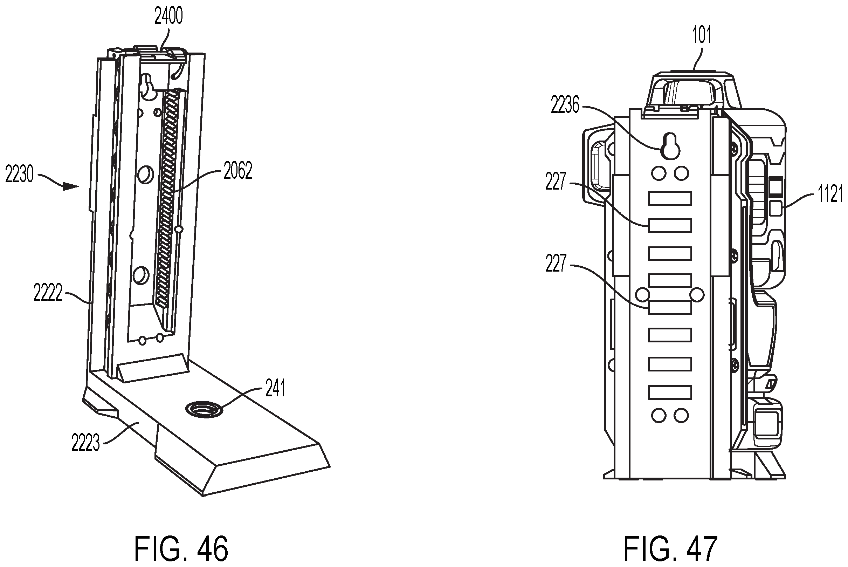

Fig. 46 illustrates the attachment mounting bracket 2230. As shown, the attachment mounting bracket 2230 may include a screw thread 2235 for mounting to a tripod or other mount. The attachment mounting bracket 2230 may also include a key hole 2236 for hanging on a screw or a nail. As also shown in Fig. 47, a rear surface of the attachment mount 2230 may include a plurality of magnets 227.

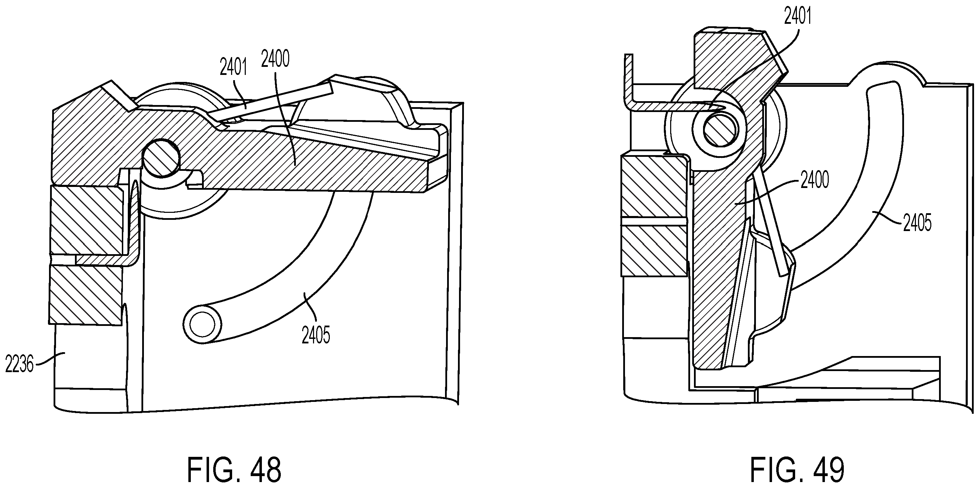

As shown in Fig. 46, there is a door 2400 at the top end of the rack 2062. The door 2400 selectively blocks the pinion 2061 from further upward movement. Figs. 48 and 49 illustrate close-up view of the door 2400. The door 2400 is in a closed position in Fig. 48 and an open position in Fig. 49. When the door 2400 is in the closed position as shown in Fig. 48, when the door prevents the pinion 2061 from moving further upward and so the movable bracket 2320 is connected to the attachment bracket 2230. That is, in the example embodiment, when the door 2400 is in the closed position of Fig. 48, the movable bracket 2320 and the attachment bracket 2230 remain connected.

In contrast, in the example embodiment, when the door 2400 is moved to the open position shown in Fig. 49, upward movement of the pinion 2061 is not prevented. Accordingly, the pinion 2061 can be moved upwardly out of engagement with the rack 2062 and the rack area and the movable bracket 2320 can be removed from the attachment bracket 2230. Accordingly, the movable bracket 2320 and laser level 1121 may used without the attachment bracket 2230. Additionally, a different movable bracket 2320 and laser level 1121 may be then engaged with the attachment bracket 2230. For example, a different type of laser level may be used with the attachment bracket, such as a line and spot laser.

As shown in Figs. 48 and 49, the door 2400 is biased towards the closed position of Fig. 48 by a spring 2401. Additionally, the attachment bracket 2230 includes a groove 2405. The door 2400 may have a protrusion that engages the groove 2405. The groove 2405 and protrusion may provide support and guidance for rotation of the door 2400 between the open and closed positions.

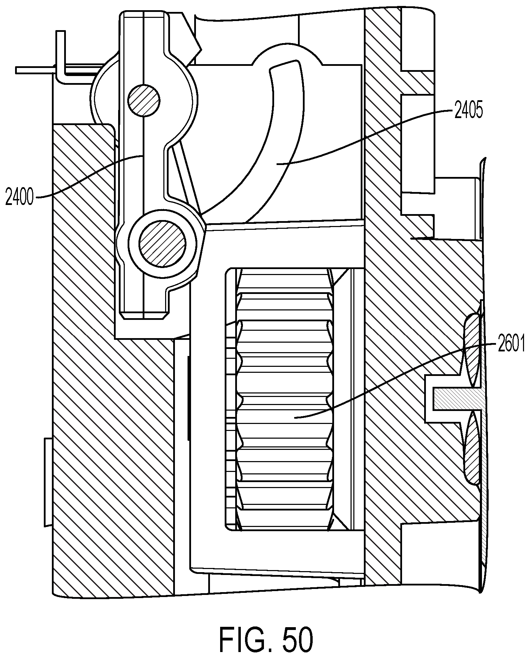

Fig. 50 illustrates the door 2400 in the open position and the pinion 2601 in a position adjacent to the open door 2400.

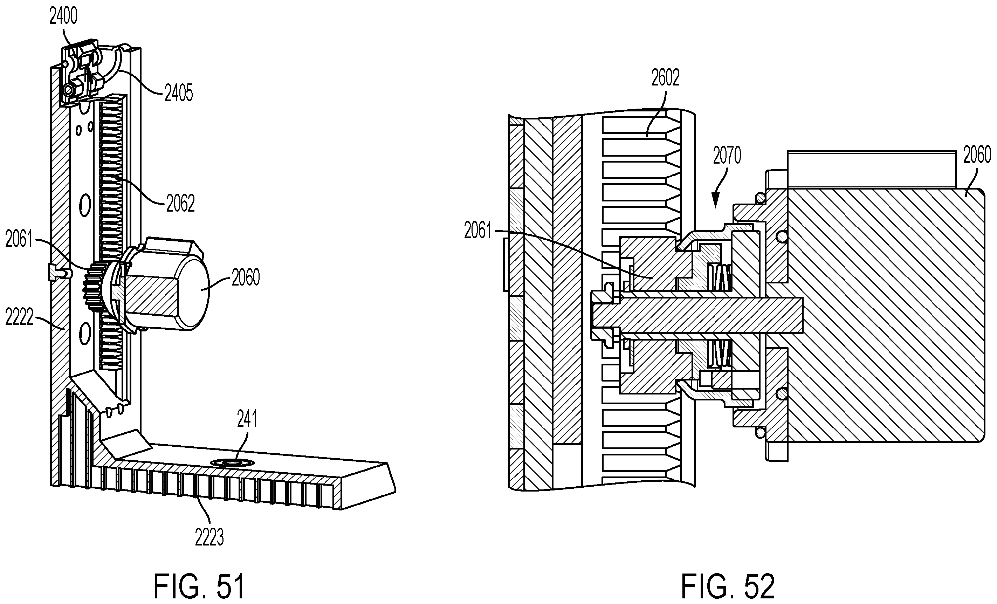

Fig. 51 is a perspective illustrative view of the motor 2060 and pinion 2061 engaged with one side of a rack 2062. A portion of the attachment bracket 2230 is removed for illustrative purposes. In the exemplary embodiment, the rack 2062 may include gear teeth on a single side along a single vertically extending axis. In other example embodiments, the rack may include gear teeth on opposite sides. That is, two sets of teeth extending along vertical lines and opposite to one another. In Fig. 51, the door 2400 is shown in the open position.

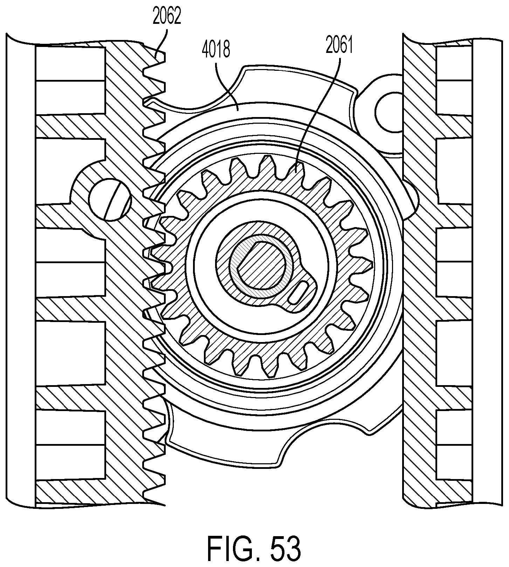

Fig. 52 is a cross-sectional view illustrating engagement of teeth of the pinion 2061 and the rack 2062 as well as the clutch 2070. Fig. 53 is another cross-sectional view illustrating engagement of teeth of the pinion 2061 and the rack 2062.

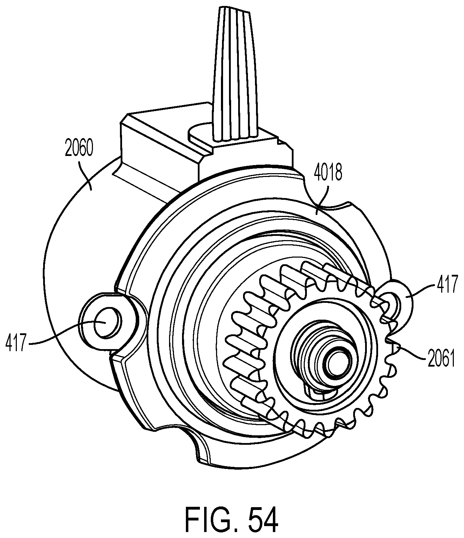

Fig. 54 illustrates a perspective view of the motor 2060 and pinion 2061.

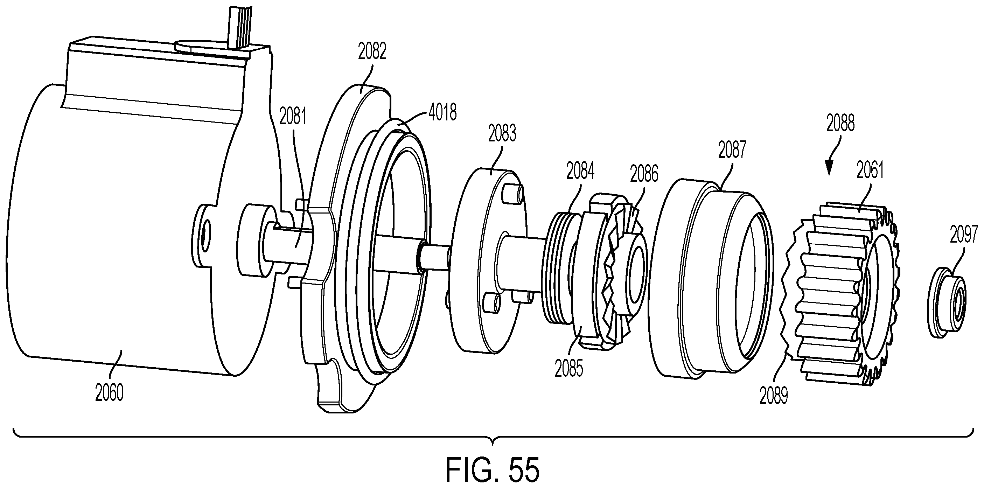

Fig. 55 is an exploded view of the motor 2060 and clutch 2070. The clutch 2070 disengages if torque on the pinion 2061 exceeds a particular amount, such as exceeding 150 millinewtonmeter (mN.m); 200 mN.m, 300 mN.m or 400 mN.m. The clutch may also protect the laser level 1121 in case of a sudden drop. The motors 2050 and 2060 may be stepper motors.

As shown in Fig. 55, there is a motor output shaft 2081 that is selectively driven in a rotational motion. A motor assembly back cap 2082 is adjacent to the motor 2060, main sleeve 2083 is adjacent to the motor assembly back cap 2082. Belville springs 2084 maintain engagement of teeth 2086 of a first clutch part 2085 and teeth 2089 of a second clutch part 2088. A rubber boot 2887 provides protection and insulation from dust, debris or liquid. Second clutch part 2088 includes clutch part teeth 2089 and spur gear teeth and serves as pinion 2061. A sleeve bearing 2097 supports the motor shaft 2081 on a base bracket. As will be appreciated, the spring 2084 biases first clutch part 2085 towards second clutch part 2088. When the first clutch part 2085 and the second clutch part 2088 are engaged, the teeth 2086 and 2089 are engaged and rotational power from the motor 2060 is transferred to the pinion 2061 such that the pinion 2061 rotates along with rotation of the motor 2060. When sufficient torque is applied, the biasing force of the spring 2084 is overcome, teeth 2086 and 2089 disengage, and torque is no longer transferred between the motor 2060 and the pinion 2061. The clutch 2070 may be integrated into the motor 2060 or clutch parts may be adjacent to the motor. In either event, the clutch 2070 may be operatively between the motor 2060 and the pinion 2061. In some embodiments, motor 2050 may include a clutch 2070.

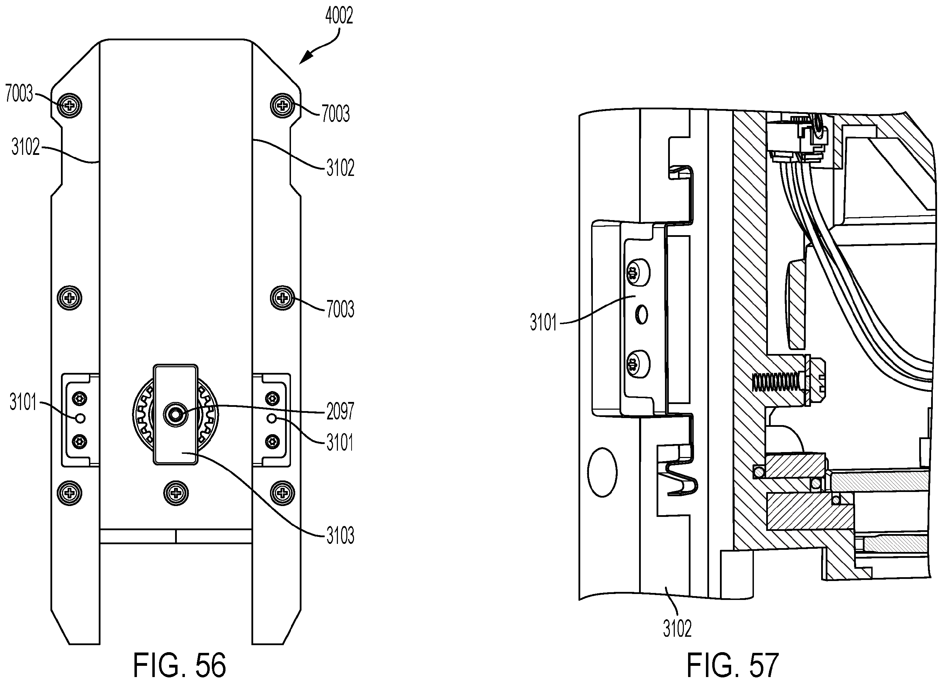

Figs. 56 and 57 illustrate the rear surface of the movable bracket 2320. As shown in Figs. 56 and 57, there are a pair of springs 3101. The springs 3101 bias the movable bracket 2320 away from the attachment bracket 2230 so as to reduce friction and facilitate smooth vertical motion. Additionally, the rear surface of the movable bracket 2320 includes a vertical guideway 3102 that engages corresponding vertical guideways 3202 on the attachment bracket 2230. As also shown in Fig. 57, a bracket 3103 helps to secure the pinion 2061.

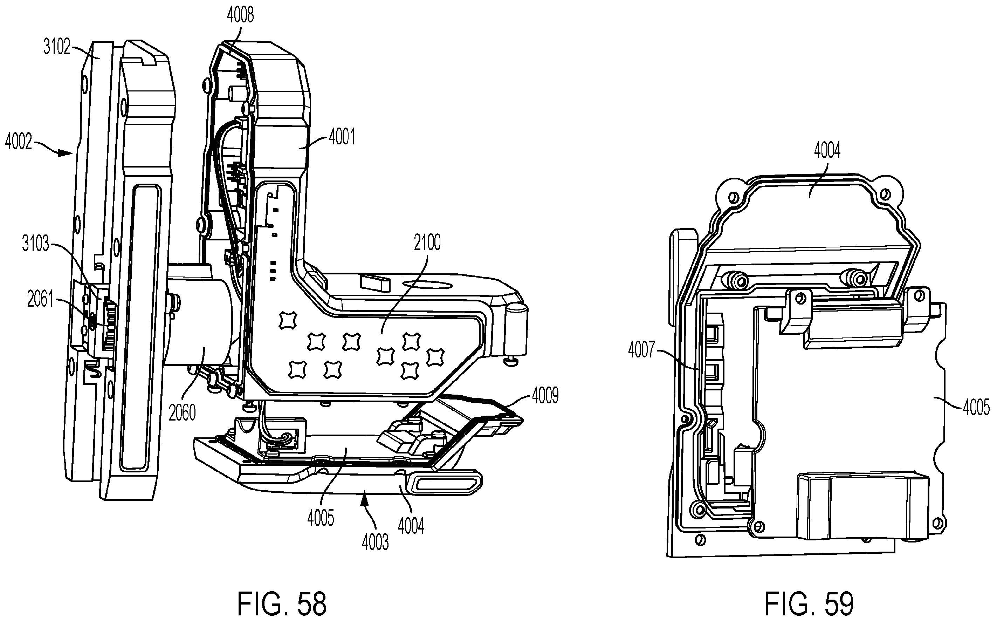

Figs. 58-65 illustrate parts of an exemplary embodiment of the laser level assembly 3010. Fig. 58 illustrates an exploded view of the movable mounting bracket 2320. The movable mounting bracket 2320 includes a base part 4001, a back cap 4002 and a battery cap 4003.

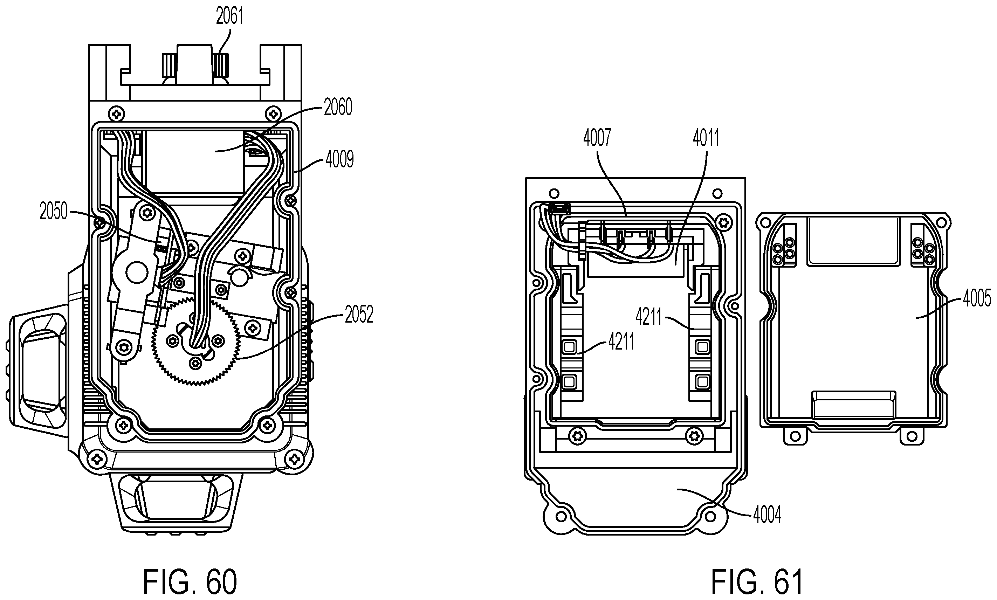

Fig. 59 illustrates a perspective exploded view of the battery cap 4003. The battery cap 4003 includes a frame 4004 and a cover plate 4005. The frame 4004 and the cover plate 4005 may be made of different materials. The frame 4004 may include plastic. The cover plate 4005 may include metal. A sealing member 4007 may be disposed between the frame 4004 and the cover plate 4005. The frame 4004 and the cover plate 4005 may be attached together by fasteners such as screws. The sealing member 4007 may include at least one of plastic, rubber or silicon. The sealing member 4007 may be compressible and form a seal to prevent dirt, dust, debris or liquids from entering in a space between the frame 4004 and the cover plate 4005. The sealing member 4007 may form a closed loop. Fastening the frame 4004 together with the cover plate 4005 may compress the sealing member 4007. With reference to Fig. 58, the base part 4001 may have a sealing member 4008 the same as or similar to the sealing member 4007. The base part 4001 may have a housing that includes plastic. The sealing member 4008 may prevent dirt, dust, debris or liquids from entering between the base part 4001 and the back cap 4002. The base part 4001 and the back cap 4002 may be fastened together such as by screws and the sealing member 4008 may be compressed when the base part 4001 and the back cap 4002 are fastened together. As shown in Fig. 60, the base part 4001 may also include a sealing member 4009 between the base part 4001 and the battery cap 4003. The sealing member 4009 may be the same as or similar to the sealing members 4007 and 4008. The base part 4001 and the battery cap 4003 may be fastened together such as by screws and the sealing member 4009 may be compressed when the base part 4001 and the battery cap are fastened together. The base part 4001, back cap 4002 and battery cap 4003 cooperate to form an internal space that is protected from ingress of dirt, dust, debris and liquids. The base part 4001, back cap 4002 and battery cap 4003 construction result in an IP 54 or better rated design.

Locations of the sealing members 4007, 4008 and 4009 may be changed and there may be additional sealing members. For example, in the example embodiment, the sealing member 4008 between the base part 4001 and the back cap 4002 is on the base part 4001. In other example embodiments, the sealing member 4007 between the base part 4001 and the back cap 4002 may be on the back cap 4002 or there may be a sealing member on both the base part 4001 and the back cap 4002. Similarly, the sealing members 4008 and 4009 may be moved to the other of the pair of parts that they are between or there may be a sealing member on each of the two mating parts.

Fig. 60 is a bottom view with the battery cap 4003 removed. As shown, parts such as the stepper motor 2050, worm 2051 and worm wheel 2052 are housed in the base part 4001 and enclosed by the battery cap 4003. One or more of a circuit board and a controller, temperature sensor, accelerometer, current sensor, voltage sensors, over and under voltage protection electronics; over and under current protection electronics, a wireless transceiver, data ports, LED lights, motor, LED or laser generator/laser diode driver electronics or other electronics may be further housed in the space between the base part 4001 and the battery cap 4003. The accelerometer may detect movement of the laser level assembly 3010, for example if the laser level assembly 3010 or a particular part thereof has experienced a free-fall, such as by being dropped.

The battery cap 4003 includes a pair of parallel rails 4211 for receiving battery pack 250 or other battery packs or larger or smaller sizes, voltages or capacities. As shown in Fig. 61, the frame 4004 holds a battery pack interface 4011. The battery pack interface 4011 may include one or more electrical connectors. The electrical connectors may include a positive receiving terminal, a negative receiving terminal and an ID receiving terminal. Wires or other electrical connectors may be engaged with the battery pack interface 4011 in order to transfer electrical power and/or data to and from the battery pack 250 through the electrical connectors of the battery pack interface 4011.

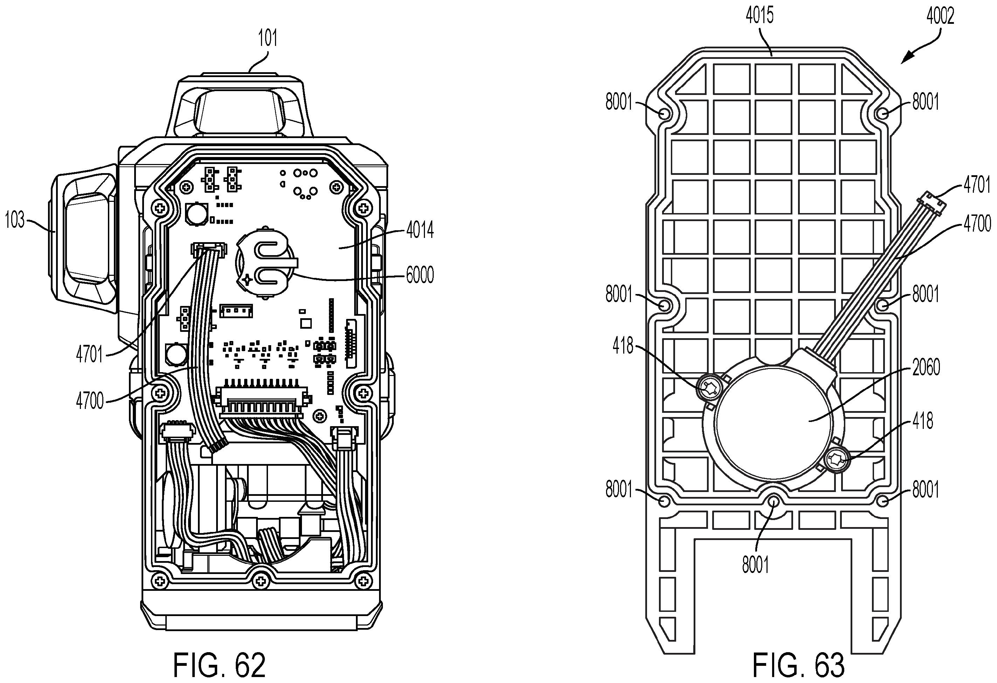

Fig. 62 illustrates the rear of the base part 4001. As shown, a circuit board 4014 is housed in this rear/vertical portion of the base part 4001. A variety of wire connectors are on the circuit board 4014 and wires or other electric connectors may connect the various electronic components throughout the laser level assembly 3010. Additionally, one or more of a controller, temperature sensor, accelerometer, current sensor, voltage sensors, over and under voltage protection electronics; over and under current protection electronics, a wireless transceiver, data ports, LED lights, motor, LED or laser generator/laser diode driver electronics or other electronics may be on the circuit board 4014. As shown in Fig. 62, an internal battery 6000 in the form of a coin cell is on the circuit board 4014. The internal battery 6000 may selectively power one or more components, including a wireless transmitter or receiver, controller or other components, including the components on the circuit board 4014.

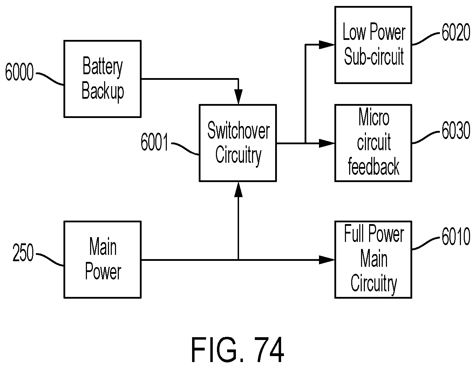

In an embodiment, the internal battery 6000 may be used in conjunction with the removable battery pack 250 as shown in the schematic of Fig. 74. As shown in Fig. 74, the removable battery pack 250 may serve as main power. When the removable battery pack 250 is present and available, the removable battery pack powers full power main circuitry 6010. The full power main circuitry 6010 provides for all or most of the operation of the laser level assembly 3010. For example, the full power main circuitry 6010 may include power for any laser generators in the laser modules 170 and any power for motors 2050 and 2060. The full power main circuitry 6010 may also include power for controllers, wireless transmitters and receivers (transceiver), and a user interface. When the full power main circuitry 6010 is used and powered by the battery pack 250, the battery backup 6000 may not be utilized. Micro-circuit feedback 6030 may determine whether the main power 250 is available or the battery backup 6000 should be utilized.

When the battery pack 250 is unavailable, due to, for example, not being connected or an undervoltage being detected (i.e., the battery pack 250 does not have sufficient charge), the switchover circuitry 6001 may change over to using the battery backup 6000. The battery backup 6000 may power a low power subcircuit 6020 that powers less functionality than the full power main circuitry 6010. For example, the lower power subcircuit 6020 may power only a wireless function by powering one or more of wireless transmission, wireless reception, and a controller. In an embodiment, the battery backup 6000 and the low power sub-circuit 6020 may be configured so that they do not power the or more motors 2050, 2060 and may be configured such that they do not power one or more laser generators of the laser modules 170. Configured not to power may include configured not to power at a functional capacity.

The secondary power device 6000 may supply power at a lower voltage than the removable battery pack 250. For example, the removable battery pack 250 may supply power at a nominal voltage of at least 10 volts (V); or at least 17V. The secondary power device 6000 may supply power at a nominal voltage of less than 15 V, less than 10V or less than 8V. In an example embodiment, the removable battery pack 250 may provide a nominal voltage or about 18V and the secondary power device may provide a nominal voltage of about 5V.

In an example embodiment, the laser level assembly 3010 may be able to wirelessly communicate via one way or two-way communication with one or both of remote 2000 and a remote computing device such as a smartphone, tablet, laptop or desktop computer. In the example embodiment, the remote 2000 may be a dedicated remote control 2000. The remote computing device may be used for one or more of asset tracking, monitoring of the tool, monitoring of the battery pack 250 (such as displaying a state of charge of the battery pack 250 or a health of the battery pack 250), programming or changing a programming of the laser level assembly 3010. For example, the remote computing device may be a computing device as described in U.S. Patent Application Publication No. 2014/0107853 and the laser level assembly 3010 and other example embodiments of laser level assemblies may communicate with the remote computing device as described in U.S. Patent Application Publication No. 2014/0107853. U.S. Patent Application Publication No. 2014/0107853 is herein incorporated by reference in its entirety. In an example embodiment, a single wireless transmitter on the circuit board 4014 may communicate with both the dedicated remote control 2000 and the remote computing device. In another example embodiment there may be a first wireless transmitter and receiver on the circuit board for communicating with the dedicated remote control and a second wireless transmitter and receiver on the circuit board for communicating with the remote computing device.

Fig. 63 is a view of the back cap 4002 facing the base part 4001 and of the motor 2060 mounted thereon. As shown, the back cap 4002 may include a sealing member 4015 between the back cap 4002 and the base part 4001 similar to other sealing members. The sealing member 4015 may be in a groove that is less than 5 mm, less than 4 mm or less than 3 mm and one or both of the back cap 4002 and base part 4001 may include a groove for accepting part of the sealing member 4015. The sealing member 4015 may be compressible and prevent dust, debris, dirt or liquids from passing into the movable mounting bracket 2320 and contribute to the IP 54 or better rating of the exemplary embodiment discussed above. As shown in Figs. 62 and 63, wires 4700 may extend from the motor 2060. An electrical connector in the form of plug 4701 may be at the end of wires 4700 and may connect to the circuit board 4014.

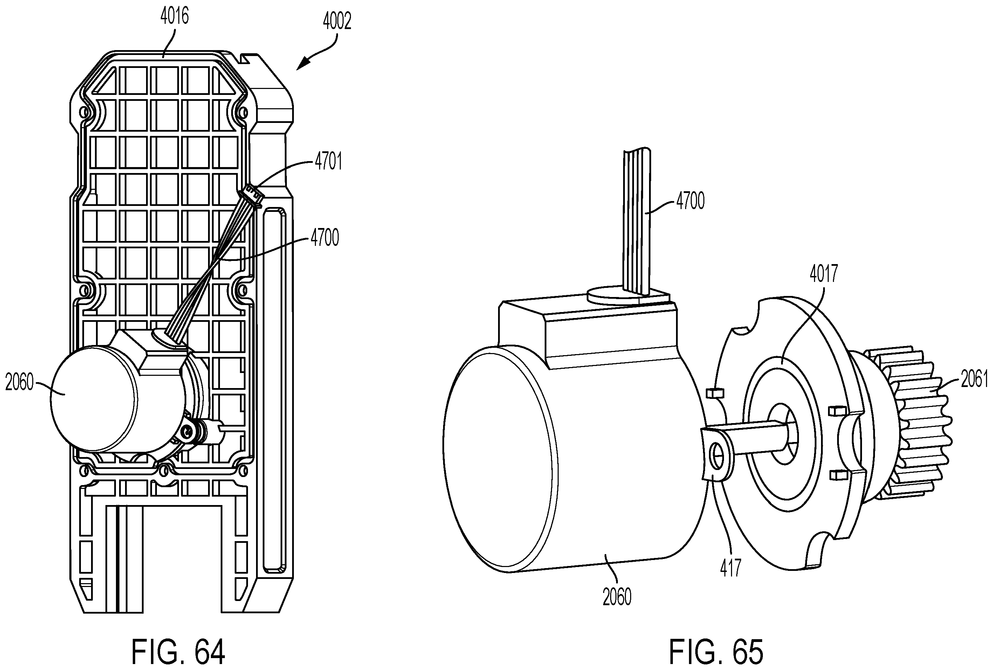

Fig. 64 is a perspective view of the back cap 4002 facing the base part with the motor 2060 mounted thereon. As shown in Fig. 64, there is a groove 4016 for receiving the sealing member 4015. The sealing member 4015 is not shown in Fig. 64. As further shown in Fig. 64, the motor 2060 may be fastened onto the back cap 4002 by fasteners such as screws. In the example embodiment, there are a pair of screw holes 417 on opposite sides of the motor 2060. As shown in Fig. 63 a pair of screws 418 are used to fasten the motor 2060 to the back cap 4002 via the screw holes 417. In other embodiments there may be more or fewer through holes and fasteners.

Fig. 65 illustrates the motor 2060 and clutch 2070 in a partially exploded view. A sealing member 4017 is provided on a rear face of the motor assembly back cap 2082. A sealing member 4018 is provided on a front face of the motor assembly back cap 2082, as shown in Figs. 54 and 55.

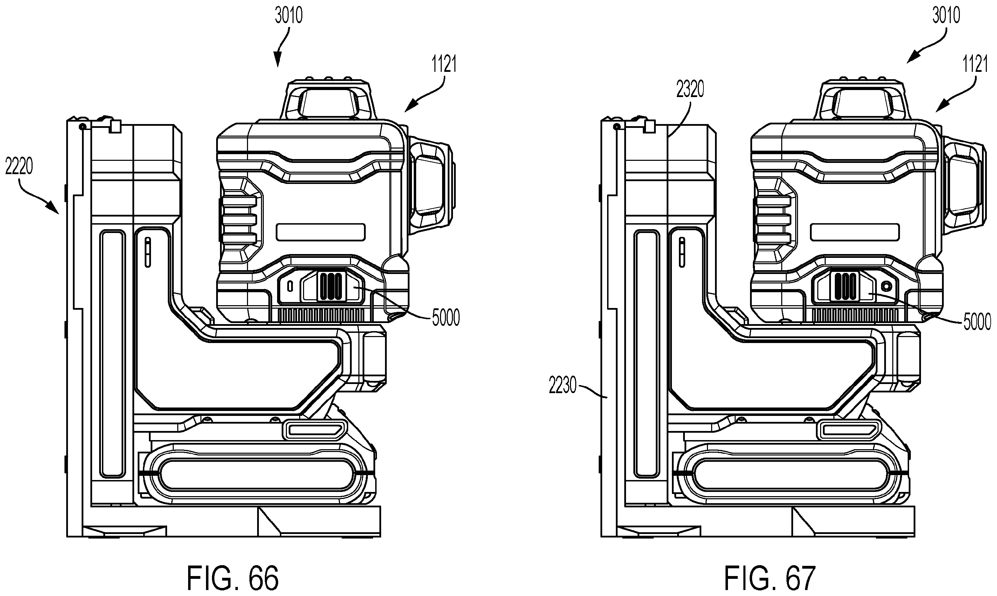

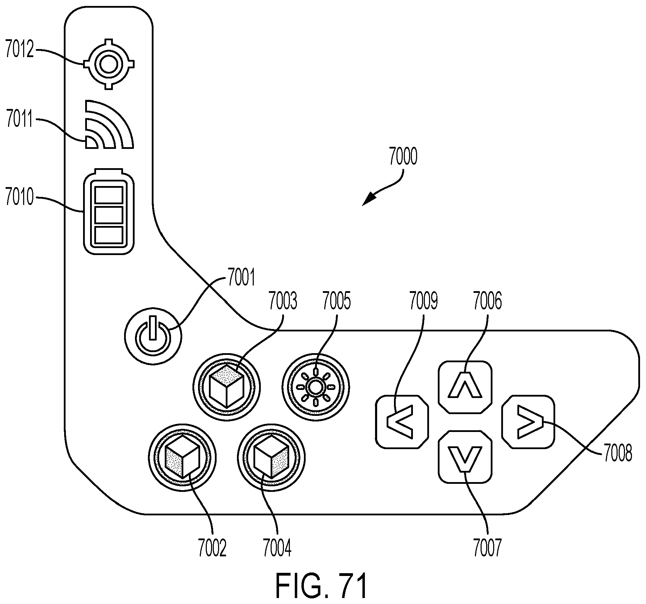

Fig. 66 illustrates a pendulum lock switch 5000 in a pendulum unlocked position and Fig. 67 illustrates the pendulum lock switch 5000 in a pendulum locked position. The pendulum lock switch 5000 can be slid between the forward/unlocked position shown in Fig. 66 and the rearward/locked position of Fig. 67. Fig. 71 illustrates an exemplary embodiment of a user interface 7000 for control panel 2100. As shown in Fig. 71, the user interface 7000 includes a number of buttons including a power button 7001; laser line buttons 7002, 7003 and 7004 for individually activating and deactivating laser lines 111, 112 and 113; laser brightness button 7005 configured to increase or decrease brightness of the laser lines 111, 112 and 113; clockwise rotation button 7008, counterclockwise rotation button 7009, upward vertical movement button 7006 and downward vertical movement button 7007 for operating rotational and vertical operation of the laser level assembly 3010. The user interface 7000 also includes a plurality of indicators 7010, 7011 and 7012. In the example embodiment, indicator 7010 indicates a state of charge of the battery 2050, indicator 7011 indicates whether if the laser level assembly 3010 is paired with remote 2000, and indicator 7012 indicates if the laser level has experienced a free-fall condition, such as may be detected by an accelerometer and determined by a fall happening for a specific period of time or more.

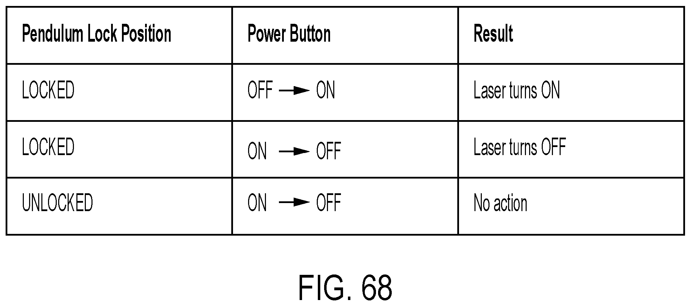

Fig. 68 is a chart illustrating operation of the laser level depending upon the position of the pendulum lock switch 5000 and the power button 7001. The first column entitled "Pendulum Lock Position" indicates the position of the pendulum lock switch 5000. The second column entitled "Power Button" indicates the status of the power button 7001. The third column entitled "Result" indicates a resultant function. As shown in Fig. 68, when the pendulum lock switch 5000 is in the locked position, the power button 7001 turns the laser level on and off. That is, the lines 111, 112, 113 of the laser level 3010 that are on are turned off and/or on. However, the user must put the pendulum in the locked position by moving the pendulum lock switch 5000 to the lock position in order to turn off the laser level 3010. For example, in the example embodiment, if the pendulum lock switch 5000 is in the unlocked position, the laser level 3010 is on such that at least one laser line 111, 112, 113 is project, and the power button 7001 is actuated, the laser level 3010 does not turn off. In the example embodiment, no action may be taken. In other example embodiments, action may be taken such as turning off one or more laser lines 111, 112, 113, but leaving other laser lines on. In other example embodiments, one or more laser lines 111, 112, 113 may blink.

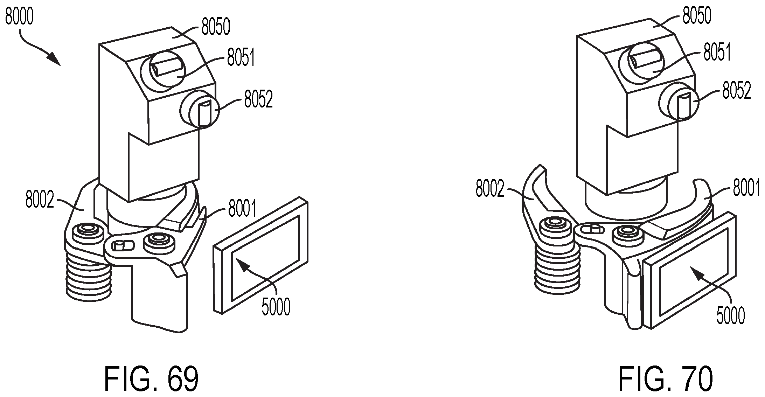

Figs. 69 and 70 schematically illustrate operation of a pendulum lock 8000. The pendulum lock 8000 may include a first arm 8001 and a second arm 8002. The pendulum lock 8000 may be biased towards the closed position shown in Fig. 69 in which the arms 8001 and 8002 close around the pendulum 8050 to lock the pendulum from movement. Fig. 70 illustrates the pendulum lock 8000 in the open position in which the arms 8001 and 8002 are moved away from the pendulum 8050 by the switch 5000 so that the pendulum 8050 may swing. In the example embodiments of Figs. 69 and 70 horizontal and vertical laser line generators 8051, 8052 are disposed on the pendulum 8050 to produce horizontal and vertical laser lines. Fig. 69 and 70 are explanatory illustrations of an example embodiment. The pendulum lock 8000 may similarly be applied to the laser module assembly 160 producing three laser lines 111, 112, 113 or other pendulums with various laser generators providing laser lines and spots. Additionally, the operation described by the table of Fig. 68 may be applied to the pendulum lock and switch shown in Figs. 69 and 70 and to other embodiments of a pendulum lock and switch.

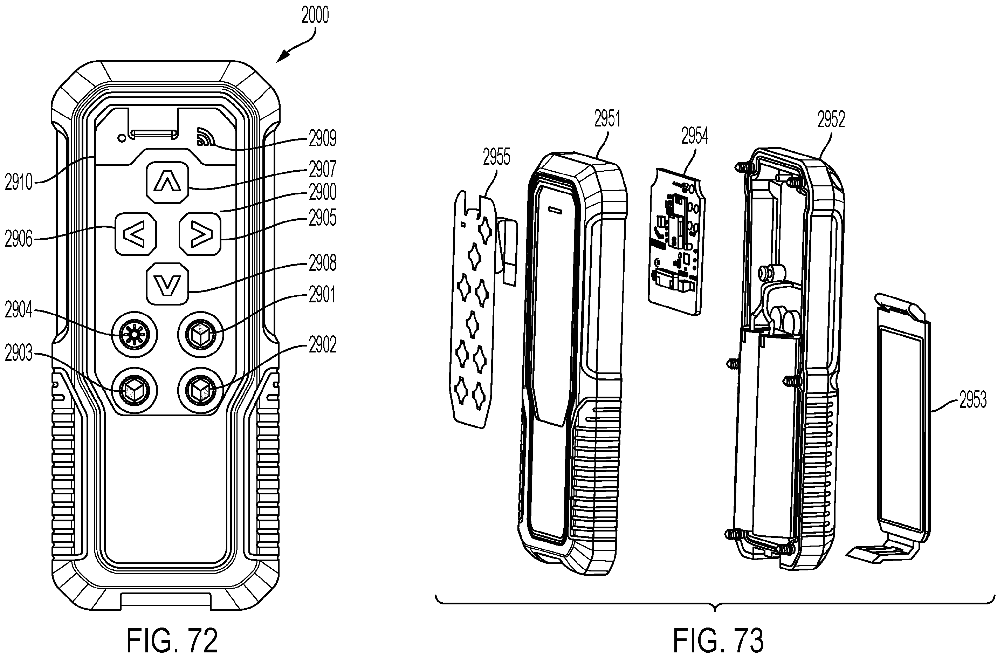

Fig. 72 illustrates remote control 2000 with user interface 2900. Fig. 73 illustrates an exploded view of remote control 2000. As shown in Fig. 72., the remote control includes a user interface 2900. In various embodiments, the user interface 2900 may include the same features as user interface 7000, fewer features or additional features. The laser level assembly 3010 may be controlled via the user interface 7000 or via the user interface 2900. In some embodiments, operation via user interface 7000 may be selectively locked out so that only the remote control 2000 commands operate the laser level assembly 3010 at a given time or operation via user interface 2900 may be selectively locked out so that only commands via user interface 7000 operate the laser level assembly 3010 at a given time.

As shown in Fig. 72, user interface 2900 includes buttons 2901, 2902 and 2903 for selectively operating laser lines 111, 112 and 113; button 2904 for adjusting the brightness of laser lines 111, 112 and 113; button 2905 for clockwise rotation of laser level 1121, button 2906 for counter-clockwise rotation of laser level 1121, button 2907 for upward vertical movement of the movable bracket 2320 and the laser level 1121 on the movable bracket 2320 and button 2908 for downward vertical movement of the movable bracket 2320 and the laser level 1121 on the movable bracket 2320. Display icon 2909 indicates whether the remote control 2000 is wirelessly paired with the laser level assembly 3010. Indicator 2910 is an LED light that flashes when one or more of the buttons on the remote control 2000 is actuated.

Fig. 73 illustrates an exploded view of the remote control 2000. As shown in Fig. 73, the remote control includes a front cover 2951, a rear cover 2952 and a battery door 2953. A printed circuit board 2954 is housed in the remote control 2000 in the internal space defined by the front cover 2951 and rear cover 2952. A variety of electronic components may be on the printed circuit board 2954 including, for example, a controller a wireless transceiver, sensors such as an accelerometer, temperature sensor, light sensor, current sensor, a memory and wire plugs or harnesses. The remote control also includes a flexible printed circuit 2955 with buttons on the front cover 2051 for facilitating the user interface 2900. The flexible circuit board 2955 may be electrically connected to the circuit board 2954. In the example embodiment, the remote control 2000 is powered by removable batteries such as alkaline batteries. In other embodiments, the remote control 2000 may be powered by integral batteries. In some embodiments the batteries may be rechargeable batteries.

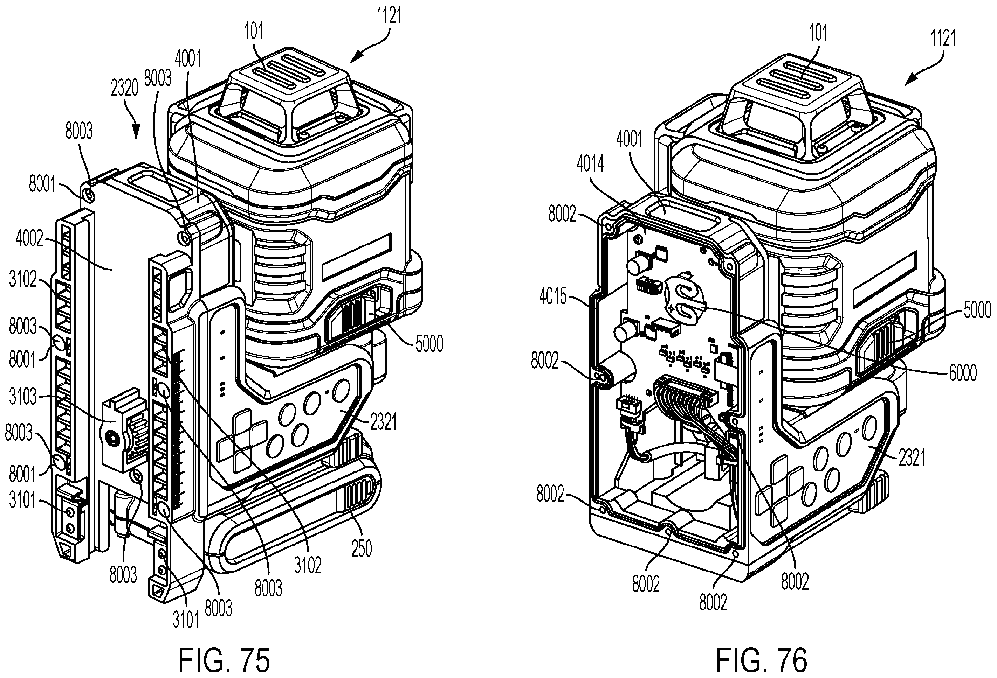

Removal and replacement of the internal battery 6000 will be described with reference to Figs. 56, 62, 63, 75 and 76. As shown in Fig. 63, the back cap 4002 includes a plurality of screw holes 8001. As shown in Fig. 76, the base part 4001 also includes a plurality of corresponding screw holes 8002. As shown in Fig. 56, a plurality of fasteners 8003 in the form of screws may be inserted into the screw holes 8001 of the back cap 4002. The screws 8003 engage with screw holes 8001 and 8002 to hold the back cap 4002 to the base part 4001 as shown in Fig. 75. In an example embodiment, the screws may be Phillips head screws; hex screws or hexalobular internal head screws. In an example embodiment, the screws 7003 may be tamper resistant screws such as tamper resistant hex screws, tamper resistant hexalobular internal head screws or one-way screws. In an example embodiment the fasteners may be another type of fasteners, such as rivets.

In order to remove and replace the internal battery 6000, the fasteners 8003 are removed. Once the fasteners 8003 are removed, the back cap 4002 may be removed, providing access to the circuit board 4014 and the internal battery 6000 on the circuit board 4014 as shown in Fig. 76. The internal battery 6000 may then be removed and replaced by a new internal battery 6000. Then the back cap 4002 is placed back into alignment with the base part 4001. Fasteners 8003 are then inserted through holes 8001 and 8002 to reattach the back cap 4002 to the base part 4001. The back cap 4002 may be reattached to the base part 4001 with the sealing member 4015 therebetween to provide water and/or dust resistance.

In an example embodiment, new replacement fasteners 8003 may be used in place of the original fasteners 8003. In an example embodiment, one or more parts may be damaged and replaced in order to facilitate replacement of the internal battery 6000. For example, in an example embodiment the fasteners may be drilled out to remove them and new fasteners may be utilized. For example, replacement of the internal battery 6000 may require damaging and replacing one or more connector for the internal battery 6000.

In an example embodiment, the internal battery 6000 is configured to be removed and replaced by a service center. That is, the laser level assembly 3010 may be configured such that a user of the laser level assembly 3010 may send or bring the laser level assembly 3010 to a service center for replacement of the internal battery 6000. The service center may be a center for repairing tools and may include specialized technicians and equipment. In other embodiments, the laser level assembly 3010 may allow user replacement of the internal battery 6000.

In some embodiments, a speed of operation of the motors 2050 and 2060 may be changed. For example, either or both of the motors 2050 and 2060 may be operated in a slow, medium or high speed.

In some embodiments, brightness of the laser lines 111, 112, and 113 may be changed a specific increments such as a low, medium and high brightness. The low brightness setting may be the lowest intensity output and may be used when there is low ambient light or the laser lines 111, 112, 113 are projected onto objects a relatively short distance away.

In some embodiments, the laser level assembly 3010 may include asset tracking to identify location, operation, power status, ownership or other characteristics as part of a power tool system tracking operation. The remote control 2000 may operate at a range of at least 50 meters, at least 60 meters, at least 70 meters, at least 80 meters or at least 90 meters.

The laser level assembly 3010 may log data and the logged data may be retrievable wirelessly or with a wire. The logged data may include usage time, temperature, movement, performance, battery life or other data.

The battery pack 250, motors 2050, 2060 or other electronics may be monitored for temperature, voltage, current or other parameter and be shut down if the measured values are determined to be too high or too low.

The battery pack 250, motors 2050, 2060, wireless transceivers and laser generators may all be controlled by the same controller, each by individual controllers or other combinations of controllers. For example, the battery pack 250, may be controlled by a first controller and the motors 2050, 2060 controlled by a separate controller.

The motors 2050, 2060 may include a backlash compensation algorithm to compensate for backlash and provide smooth, precise and reliable operation.

Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims.

It is to be understood that the present disclosure contemplates that, to the extent possible, one or more features of any embodiment can be combined or exchanged with one or more features of any other embodiment.
Further aspects are described in the following numbered clauses.
1. A laser level assembly comprising: a mounting bracket; a laser level on the mounting bracket, the laser level comprising a laser generator, the laser level configured to project at least one of a horizontal line, a vertical line or a laser spot; wherein the mounting bracket comprises a battery pack receptacle configured to selectively receive a removable battery pack; at least one of a wireless transmitter and a controller; and a secondary power device; wherein the removable battery pack is configured to power the at least one laser generator; and wherein the secondary power device is configured to power at least one of the wireless transmitter and the controller.
2. The laser level assembly of clause 1, wherein the secondary power device is in the mounting bracket.
3. The laser level assembly of clause 1 or clause 2, wherein the secondary power device supplies power at a first voltage; wherein the removable battery pack supplies power at a second voltage; and wherein the first voltage is lower than the second voltage.
4. The laser level assembly of any preceding clause, wherein the secondary power device comprises an internal battery.
5. The laser level assembly of any preceding clause, wherein the secondary power device comprises a coin cell.
6. The laser level assembly of any preceding clause, wherein the mounting bracket comprises a base part and a back cap
7. The laser level assembly of any preceding clause, further comprising a circuit board located in the mounting bracket, wherein the secondary power device is located on the circuit board.
8. The laser level assembly of clause 7 when dependent on clause 6, wherein the circuit board and the secondary power device are located in the mounting bracket between the base part and the back cap.
9. The laser level assembly of any one of clauses 6 to 8, wherein the base part and the back cap are fixed together via fasteners.
10. The laser level assembly of any one of clauses 6 to 9, further comprising a sealing member between the base part and the back cap.
11. The laser level assembly of clause 7 or any claim dependent thereon, wherein the controller is located on the circuit board.
12. The laser level assembly of any preceding clause, wherein the secondary power device is integral with the laser level assembly.
13. The laser level assembly of clause 6 or any clause dependent thereon, wherein the base part and the back cap provide a water-resistant housing.

## Claims

1. A laser level assembly (3010) comprising:
a laser level (1121), the laser level comprising a laser generator, the laser level configured to project at least one horizontal line (111) and at least one vertical line (112, 113);
a battery pack receptacle configured to selectively receive a removable battery pack (250), the removable battery pack configured to power the laser generator;
a wireless transmitter;
a secondary power device (6000), the secondary power device configured to power the wireless transmitter;
wherein the secondary power device is in a water-resistant housing.

2. The laser level assembly (3010) of claim 1, wherein the water-resistant housing includes a first housing part, a second housing part and a sealing member (4015) between the first housing part and the second housing part.

3. The laser level assembly (3010) of claim 2, wherein the first housing part is fixable to the second housing part via at least one fastener (8003).

4. The laser level assembly (3010) of any preceding claim, wherein the secondary power device (6000) is configured to supply power at a first voltage; the removable battery pack is configured to supply power at a second voltage; the first voltage being lower than the second voltage; optionally wherein the secondary power device comprises a coin cell.

5. The laser level assembly (3010) of any preceding claim, comprising a circuit board (4014) in the water-resistant housing.

6. The laser level assembly (3010) of claim 5, wherein the secondary power device (6000) is on the circuit board (4014).

7. The laser level assembly (3010) of any preceding claim, wherein the secondary power device (6000) is integral with the laser level assembly.

8. The laser level assembly (3010) of any preceding claim, wherein the wireless transmitter is a wireless transceiver.

9. The laser level assembly (3010) of any preceding claim, wherein the wireless transceiver is configured to receive wireless signals from one or more of a tablet, a computer and a smartphone.

10. The laser level assembly (3010) of any preceding claim, wherein the wireless transceiver is configured to receive one or more of Wi-Fi signals, infrared signals, radio frequency (RF) signals and Bluetooth signals.

11. The laser level assembly (3010) of claim 9 or claim 10, comprising a controller (260) operatively coupled to at least one motor (50, 60) configured to actuate the laser level, the controller being configured to operate the at least one motor in accordance with the wireless signals.

12. The laser level assembly (3010) of claim 11, wherein the secondary power device (6000) is configured to power the controller.

13. The laser level assembly (3010) of any preceding claim, comprising a user input configured to receive control signals from a user.

14. The laser level assembly (3010) of any preceding claim, wherein the battery pack receptacle is configured to slidingly receive the battery pack.

15. The laser level assembly (3010) of any preceding claim, comprising a bracket assembly (2220).
